# EUROPEAN PATENT SPECIFICATION

(11) **EP 2 965 306 B1**
(45) Date of publication and mention of the grant of the patent: **03.05.2017**
(21) Application number: 14761193.3
(22) Date of filing: 06.03.2014
(51) Int. Cl.: C09D 1/00, C09J 7/02, B41M 5/50, B41J 2/01, G09F 3/02, G09F 3/10

(54) **ADHESIVE LABEL FOR INKJET RECORDING**
KLEBEETIKETT FÜR TINTENSTRAHLAUFZEICHNUNG
ETIQUETTE ADHÉSIVE POUR ENREGISTREMENT À JET D'ENCRE

(30) Priority: 07.03.2013 JP 2013044885
(43) Date of publication of application: 13.01.2016
(73) Proprietor: Ricoh Company, Ltd., Tokyo 143-8555 (JP)
(72) Inventor: UETAKE, Kazuyuki, Tokyo 143-8555 (JP)
(74) Representative: Lamb, Martin John Carstairs
(86) International application number: PCT/JP2014/056595
(87) International publication number: WO 2014/136989

(56) References cited:
- EP-A1- 1 473 150
- WO-A1-03/066327
- JP-A- H10 100 561
- JP-A- H11 212 470
- JP-A- 2005 280 026
- JP-A- 2010 149 445
- JP-U- S5 984 565

## Description

### Technical Field

The present invention relates to an adhesive label for inkjet recording that needs no paper liner.

### Background Art

Adhesive labels are used as labels, seals, stickers, patches, etc. for wide applications such as business use, office use, and home use. Usually, such adhesive labels are composed of a support member having a recording layer, and an adhesive and a paper liner that are laminated or stacked on the back side of the support member.

Adhesive labels are used as labels, with characters and images printed on the recording layer on the support member with various printing schemes. Among the various printing schemes, inkjet recording schemes are rapidly spreading in various applications in the form of recording apparatuses for color images, etc., because with the inkjet recording schemes, full-color images and high speed operations are easy and adaptability for small-lot printing is high. This trend comes also to labels, and adhesive labels for inkjet recording that use inkjet recording sheets are used more often.

Generally, adhesive labels have an adhesive layer on the back side of a support member, and a paper liner on the surface of the adhesive layer. Therefore, a lot of paper liners are discarded after the labels are pasted on the target. Because paper liners cannot be recycled and repulped in typical waste paper recovery facilities, they are currently incinerated and landfilled. Further, labels before printed are set in the printers typically in a rolled state and then subjected to printing. Since the paper liner is stacked, the roll has a larger diameter per unit length, and the length of label that can be set in the printer is limited to a short one. This necessitates frequent replenishment of unprinted roll and spoils convenience.

To overcome this problem, there is a proposal for adhesive labels for thermosensitive recording, to provide a releasing layer on the surface of a thermosensitive recording layer, to thereby eliminate the necessity for a paper liner (see PTL 1).

Also for adhesive labels for inkjet printing, there is an increasing demand for elimination of paper liners. Generally, inkjet recording sheets have a porous ink receiving layer on the surface, and have an image formed by absorbing ink into the ink receiving layer. Therefore, in order to do without the paper liner, it is necessary to impart separating ability to the surface of the ink receiving layer.

The ink receiving layer is bulky and porous. Therefore, if the surface of the ink receiving layer is simply coated with a releasing agent, the releasing agent is absorbed into the ink releasing layer and cannot exert the separating function sufficiently. Further, if the ink receiving layer is coated with a lot of releasing agent in order for the releasing ability to be exerted, the voids in the ink receiving layer are filled up to become unable to absorb ink, and besides, the surface becomes strongly non-polar and cannot have a favorable image formed because the surface repels inkjet ink irrespective of whether the ink is water-based or oil-based. Ink fixability of the inkjet ink on the label surface also becomes poor, and a problem may occur that the image is peeled when scratched.

To overcome this problem, there is proposed an adhesive label for inkjet recording that is recordable with water-based inkjet ink, and that uses as a releasing agent, a compound selected from long-chain alkyl group-containing polyvinyl alcohol, long-chain alkyl group-containing amino-alkyd resin, and long-chain alkyl group-containing polyethylene imine (see PTL 2, PTL 3, and PTL 4). However, even if such a releasing agent is used, adhesive labels for inkjet recording have not been able to achieve enough suitability for inkjet recording, although it has been improved a bit. Moreover, greater power is required for separation and more power is required to unroll the label from the roll than when a releasing agent made of a silicone compound or a fluorine compound is used. Therefore, the inkjet recording suitability of the label may be insufficient because printers may cause operating troubles. Printers may require elaborate mechanisms in order to ensure stable operability.

There is also proposed an adhesive label for inkjet recording that uses as a releasing agent, a mixture of a styrene-based polymer and a silicone-based releasing agent, or a mixture of a styrene-based polymer and a perfluoro-based releasing agent (see PTL 5). However, although the adhesive label for inkjet recording according to this proposal is printable with non-water-based inkjet ink, it repels water-based inkjet ink and cannot have an image formed. Therefore, it is requested to provide an adhesive label for inkjet recording that needs no paper liner, and is excellent in suitability for inkjet printing and physical durability of a printed image.JPS5984565 relates to labels and roll constructions. EP1473150 teaches a releasing material comprising a substrate and a release layer, wherein the release layer comprises a polymer having a carboxylate group and a silicone.

### Citation List

### Patent Literature

[PTL1] Japanese Patent Application Publication (JP-B) No. 04-15110
[PTL 2] International Publication No. WO2005/040297
[PTL 3] Japanese Patent Application Laid-Open (JP-A) No. 2001-139900
[PTL 4] JP-A No. 2006-144021
[PTL 5] JP-A No. 2005-029718

### Summary of Invention

### Technical Problem

An object of the present invention is to provide an adhesive label for inkjet recording that needs no paper liner, and allows separation with less power without sacrificing excellent inkjet printing suitability with water-based inkjet ink and physical durability of a printed image.

### Solution to Problem

An adhesive label for inkjet recording according to the present invention as a solution to the problems described above includes a support member, includes at least an ink receiving layer and a releasing layer on one surface of the support member in this order, and includes an adhesive layer on the other surface of the support member.

The releasing layer contains at least a silicone resin, and a releasing layer coverage, which is a percentage at which the releasing layer covers the surface of the ink receiving layer, is from 20% to 70%, characterized in that the releasing layer is at least any of a discontinuous layer and an island-like scattered layer.

### Advantageous Effects of Invention

The present invention can provide an adhesive label for inkjet recording that can solve the conventional problems described above, needs no paper liner, and can allow separation with less power without sacrificing inkjet printing suitability with water-based inkjet ink and physical durability of a printed image.

### Brief Description of Drawings

Fig. 1A is a photograph taken by a scanning electron microscope, showing an example recording surface of an adhesive label for inkjet recording, of which releasing layer is a discontinuous layer or an island-like scattered layer (with a releasing layer coverage of 41%).
Fig. 1B is a binarized image of Fig. 1A.
Fig. 2A is a photograph taken by a scanning electron microscope, showing another example recording surface of an adhesive label for inkjet recording, of which releasing layer is a discontinuous layer or an island-like scattered layer (with a releasing layer coverage of 41%).
Fig. 2B is a binarized image of Fig. 2A.
Fig. 3A is a photograph taken by a scanning electron microscope, showing another example of a recording surface of an adhesive label for inkjet recording according to Comparative Example 2 (with a releasing layer coverage of 95%).
Fig. 3B is a binarized image of Fig. 3A.
Fig. 4A is a photograph taken by a scanning electron microscope, showing another example of a recording surface of an adhesive label for inkjet recording according to Comparative Example 28 (with a releasing layer coverage of 15%).
Fig. 4B is a binarized image of Fig. 4A.

### Description of Embodiments

### (Adhesive Label for Inkjet Recording)

An adhesive label for inkjet recording according to the present invention includes a support member, includes at least an ink receiving layer and a releasing layer on one surface of the support member in this order, includes an adhesive layer on the other surface of the support member, and further includes other layers according to necessity.

### <Releasing Layer>

The releasing layer contains at least a silicone resin, preferably contains at least any of a water-insoluble resin, polyolefin particles, and silicone particles, and further contains other components according to necessity.

In the present invention, releasing layer coverage, which is a percentage at which the releasing layer covers the surface of the ink receiving layer, is from 20% to 70%, and preferably from 30% to 50%.

When the releasing layer coverage is greater than 70%, sufficient inkjet recording suitability may not be obtained. When it is less than 20%, excessively large power is required to unroll from a roll of the label, and separation at the interface between the releasing layer and the adhesive layer may be impossible.

The releasing layer coverage can be calculated by obtaining the surface area of a portion of the releasing layer that covers the surface of the ink receiving layer by observing the recording surface of the adhesive label for inkjet recording with an electron microscope, and dividing the obtained surface area by the surface area of the ink receiving layer. Specifically, an SEM image captured with a scanning electron microscope (product name: S-3700N manufactured by Hitachi High Technologies Corporation) under the following conditions is observed at a magnification of x 1,000, to thereby obtain a surface image.

### <Capturing Conditions>

- Detector: SE detector
- Accelerating voltage: 15 kV
- Working Distance: 10 mm
- Emission Current: 70 µA
- Probe Current: 50

The obtained surface image is loaded into an image processing software program [WIN ROOF VERSION 7.0.0, demo version (software for Windows personal computer) manufactured by Mitani Corporation], and with a "binarization process" command, binarized based on image brightness and discriminated into releasing layer portion and ink receiving layer portion. The threshold for binarization is manually adjusted to match the boundary between releasing layer portion and ink receiving layer portion that is recognized when the surface image is visually observed. In many cases, a releasing layer portion is bright and an ink receiving layer portion is dark.

Next, with a "measurement" command, the area rate of the releasing layer portion is obtained as a releasing layer coverage.

In the step of binarizing the surface image, when a clear contrast difference cannot be observed between releasing layer portion and ink receiving layer portion, various electron microscopic analysis methods may be combined to enable discrimination between releasing layer portion and ink receiving layer portion.

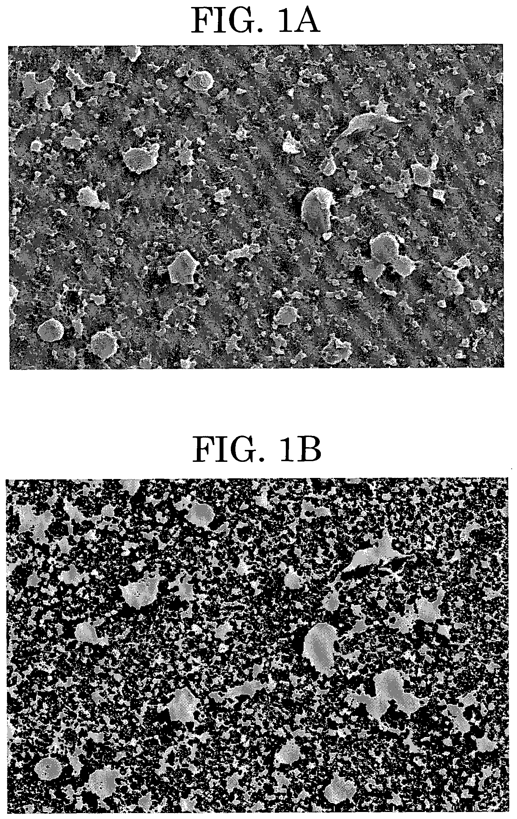

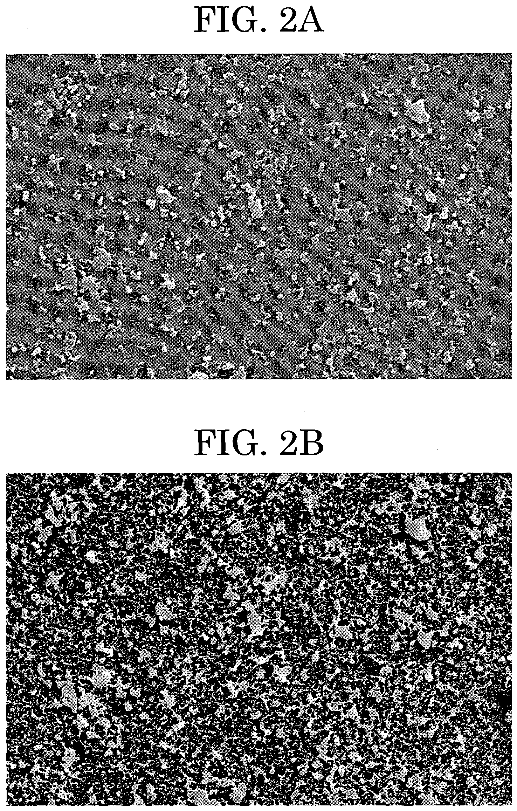

Here, Fig. 1A and Fig. 2A both show a surface image taken by an electron microscope, showing a recording surface of an adhesive label for inkjet recording, of which releasing layer coverage is 41%. Fig. 1B shows a binarized image of Fig. 1A, and Fig. 2B shows a binarized image of Fig. 2A. Fig. 1A and Fig. 1B show a recording surface when the releasing layer contains polyolefin particles, and Fig. 2A and Fig. 2B show a recording surface when the releasing layer is free from polyolefin particles.

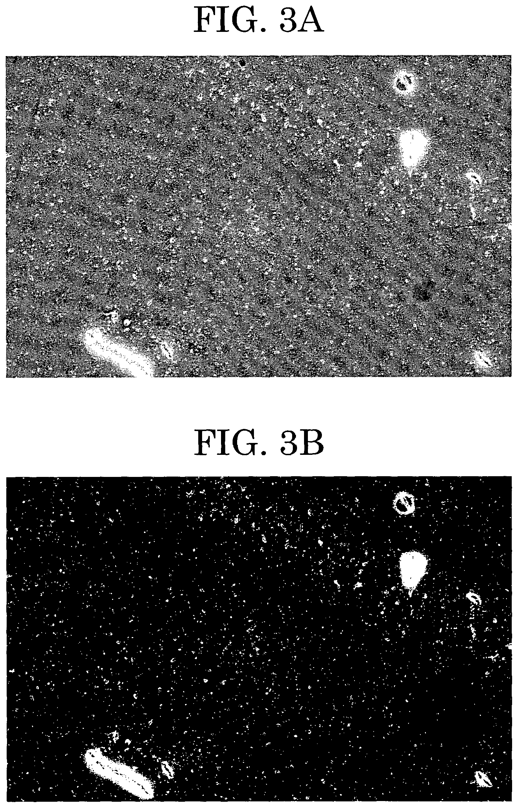

Fig. 3A shows a surface image taken by an electron microscope, showing a recording surface of an adhesive label for inkjet recording according to Comparative Example 2 described later, of which releasing layer coverage is 95%. Fig. 3B shows a binarized image of Fig. 3A.

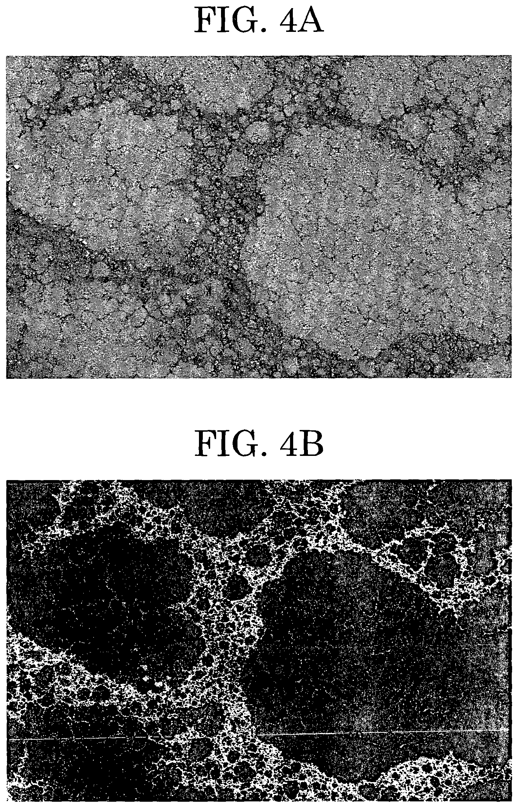

Fig. 4A shows a surface image taken by an electron microscope, showing a recording surface of an adhesive layer for inkjet recording according to Comparative Example 28 described later, of which releasing layer coverage is 15%. Fig. 4B shows a binarized image of Fig. 4A.

The adhesive label for inkjet recording shown in Fig. 1A is manufactured as follows.

### -Preparation of Inorganic Particle Dispersion Liquid-

Polydiallyldimethyl ammonium chloride (product name: SHALLOL DC-902P manufactured by Dai-Ichi Kogyo Seiyaku Co., Ltd., 51% by mass aqueous solution) (0.78 parts by mass) is dissolved in water (39.22 parts by mass), and gas-phase silica (product name: AEROSIL 300 manufactured by Nippon Aerosil Co., Ltd.) (10 parts by mass) is dispersed in the resulting solution. This dispersion liquid is processed with a high-pressure homogenizer to thereby prepare an inorganic particle dispersion liquid with a solid content concentration of 20.8% by mass and an average particle diameter of 0.25 µm.

### -Preparation of Ink Receiving Layer Coating Liquid-

Water (31.4 parts by mass) is added to the inorganic particle dispersion liquid (47.6 parts by mass), and a 10% by mass aqueous solution of acetoacetyl-modified polyvinyl alcohol (product name: GOHSEFIMER Z-410 manufactured by Nippon Synthetic Chemical Industry Co., Ltd.) (21.0 parts by mass) is mixed therewith, to thereby prepare an ink receiving layer coating liquid having a solid content concentration of 12% by mass.

### -Formation of Ink Receiving Layer-

High-quality paper having a basis weight of 63 g/m² is used as the support member. One surface of the high-quality paper is coated with the ink receiving layer coating liquid with a wire bar such that the amount of solid content coated will be 15 g/m². After this, the coated surface is irradiated with ultraviolet with a high-pressure mercury lamp in an integrated irradiation amount of 500 mJ/cm² measured with an integrating ultraviolet illuminometer (PD-365 manufactured by Eye Graphics Co., Ltd.), and dried with hot air of 120°C, to thereby form an ink receiving layer on the support member.

### -Preparation of Releasing Layer Coating Liquid-

The following compositions are mixed to prepare a releasing layer coating liquid having a solid content concentration of 20% by mass.

### [Compositions]

- Silicone resin emulsion (product name: KM-3951 manufactured by Shin-Etsu Chemical Co., Ltd., solid content concentration of 40% by mass) ---38.5 parts by mass
- Silicone resin curing catalyst (product name: CAT-PM-10A manufactured by Shin-Etsu Chemical Co., Ltd., solid content concentration of 40% by mass) ---1.9 parts by mass
- Polyvinyl acetate emulsion (product name: MOVINYL 168N manufactured by Nippon Synthetic Chemical Industry Co., Ltd., solid content concentration of 50% by mass) --- 1.9 parts by mass
- Acrylic-modified organopolysiloxane emulsion (product name: CHALINE R-170EM manufactured by Nissin Chemical Industry Co., Ltd., solid content concentration of 46% by mass) ---2.1 parts by mass
- Polyethylene particle dispersion (product name: CHEMIPEARL W410 manufactured by Mitsui Chemicals, Inc., solid content concentration of 40% by mass) ---9.6 parts by mass
- Water ---55.6 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) is 10 um.

### -Formation of Releasing Layer-

The surface of the formed ink receiving layer is coated with the releasing layer coating liquid with a wire bar such that the amount of solid content coated will be 3.0 g/m². Then, the coated surface is dried in an oven of 100°C for 10 minutes, to thereby form a releasing layer.

### -Formation of Adhesive Layer-

The surface of the support member on which the ink receiving layer is not provided is coated with a pressure-sensitive adhesive (acrylic emulsion, product name: BPW6111 manufactured by Toyo Ink Co., Ltd., solid content concentration of 60% by mass) such that the amount of solid content coated will be 15 g/m², and dried with hot air of 110°C, to thereby form an adhesive layer. In the way described above, the adhesive label for inkjet recording can be manufactured.

The adhesive label for inkjet recording shown in Fig. 2A is manufactured in the same manner as described above, except that the releasing layer coating liquid used for the label of Fig. 1A is changed to a releasing layer coating liquid shown below.

### -Preparation of Releasing Layer Coating Liquid-

A releasing layer coating liquid having a solid content concentration of 20% by mass is prepared by mixing the following compositions.

### [Compositions]

- Silicone resin emulsion (product name: KM-3951 manufactured by Shin-Etsu Chemical Co., Ltd., solid content concentration of 40% by mass) ---42.6 parts by mass
- Silicone resin curing catalyst (product name: CAT-PM-10A manufactured by Shin-Etsu Chemical Co., Ltd., solid content concentration of 40% by mass) ---2.1 parts by mass
- Polyvinyl acetate emulsion (product name: MOVINYL 168N manufactured by Nippon Synthetic Chemical Industry Co., Ltd., solid content concentration of 50% by mass) --- 2.3 parts by mass
- Acrylic-modified organopolysiloxane emulsion (product name: CHALINE R-170EM manufactured by Nissin Chemical Industry Co., Ltd., solid content concentration of 46% by mass) ---2.1 parts by mass
- Water ---50.9 parts by mass

The releasing layer is at least any of a discontinuous layer and an island-like scattered layer.

When the releasing layer is at least any of a discontinuous layer and an island-like scattered layer, the releasing layer does not cover the surface of the ink receiving layer entirely, but the releasing layer covers the surface of the ink receiving layer partially as islands, a web, or dots. The releasing layer may be a continuous layer that includes a discontinuous layer as a part thereof, as long as the releasing layer coverage falls within the range described above.

The film formed state of whether the releasing layer is formed as at least any of a discontinuous layer and an island-like scattered layer can be evaluated, for example, from a surface image and a binarized image of the recording surface of the adhesive label for inkjet recording, based on the distribution of releasing layer portions.

In Fig. 1B and Fig. 2B, it can be seen that the releasing layer displayed brightly are formed in the ink receiving layer displayed less brightly, in the form of discontinuous layer or island-like scattered layer.

### -Silicone Resin-

The silicone resin is not particularly limited and may be appropriately selected according to the purpose. Examples thereof include solventless silicone resin, solvent-containing silicone resin, and aqueous emulsion silicone resin. One of these may be used alone, or two or more of these may be used in combination. Among these, aqueous emulsion silicone resin is particularly preferable because a releasing layer in a discontinuous layer state or an island-like scattered layer state can be easily formed with it.

The silicone resin may be an appropriately synthesized product or a commercially-available product. Examples of commercially-available products include silicone resin emulsion (product name: KM-3951 manufactured by Shin-Etsu Chemical Co., Ltd.), silicone resin emulsion (product name: DEHESIVE 430 manufactured by Wacker Asahikasei Silicone Co., Ltd.), and silicone resin emulsion (product name: SILICOLEASE 902 manufactured by Arakawa Chemical Industries, Ltd.).

The content of the silicone resin in the releasing layer is not particularly limited and may be appropriately selected according to the purpose. However, it is preferably from 50% by mass to 90% by mass.

### -Water-Insoluble Resin-

The releasing layer preferably contains a water-insoluble resin in order to reduce the power required to be unrolled from a roll (separation power).

Here, the water-insoluble resin means a resin that dissolves in 1 L of water of 25°C in an amount of only 10 g or less. Whether the resin has dissolved or not can be judged by whether the water is transparent or not, and can be confirmed by visual observation.

The water-insoluble resin is not particularly limited and may be appropriately selected according to the purpose. Examples thereof include: conjugate diene-based copolymer such as polystyrene, styrene-butadiene copolymer, and methyl methacrylate-butadiene copolymer; acrylic-based polymer such as polymer or copolymer of acrylic acid ester and methacrylic acid ester; polyvinyl acetate; ethylene-vinyl acetate copolymer and vinyl chloride-vinyl acetate copolymer; functional group-modified copolymer obtained by modifying those polymers described above with a monomer containing a functional group such as carboxy group; thermosetting resin such as melamine resin and urea resin; polyurethane resin; unsaturated polyester resin; polyvinyl butyral; alkyl resin latex; silicone resin; and silicone-based copolymer. One of these may be used alone, or two or more of these may be used in combination. Among these, polyvinyl acetate, ethylene-vinyl acetate copolymer, acrylic-modified organopolysiloxane, and acrylic-based copolymer are more preferable because the balance between the ink receiving ability and the separating ability will be good.

The content of the water-insoluble resin in the releasing layer is not particularly limited and may be appropriately selected according to the purpose. However, it is preferably from 1 part by mass to 25 parts by mass relative to 100 parts by mass of the silicone resin, and more preferably from 2 parts by mass to 15 parts by mass in terms of balance between the effect of reducing the power required to unroll from a roll and the ink receiving ability. When the content is less than 1 part by mass, the effect of reducing the power required to unroll from a roll may not be obtained sufficiently. When it is greater than 25 parts by mass, the power required to unroll from a roll may be increased.

The method for adding the water-insoluble resin in the releasing layer is preferably a method of dissolving the water-insoluble resin in the releasing layer coating liquid and printing or coating the coating liquid, when the releasing layer coating liquid is organic solvent-based. When the releasing layer coating liquid is water-based, an aqueous emulsion of the water-insoluble resin may be mixed in the releasing layer coating liquid, and the coating liquid may be printed or coated. Of these, the method of mixing the aqueous emulsion of the water-insoluble resin in the water-based releasing layer coating liquid, and printing or coating the coating liquid is preferable, because an ink receiving layer with a favorable balance between the ink receiving ability and the separating ability is easier to form.

### -Polyolefin Particles, Silicone Particles-

The releasing layer preferably contains at least any of polyolefin particles and silicone particles having a volume average particle diameter of from 3 µm to 15 µm. This will reduce the power required to unroll from a roll (separation power) and improve physical durability of an inkjet printed image.

When the volume average particle diameter is less than 3 µm, the effect of improving the physical durability of a printed image may not be obtained sufficiently. When it is greater than 15 µm, the power required to unroll from a roll may be increased.

Here, the volume average particle diameter is an average particle diameter on the volume basis obtained by measuring a dilute dispersion liquid of polyolefin particles or silicone particles with a laser diffraction/scattering particle size distribution meter.

The polyolefin particles are not particularly limited and may be appropriately selected according to the purpose. Examples thereof include polyolefin particles such as polyethylene and polypropylene, particles of modified polyolefin.

The silicone particles are not particularly limited and may be appropriately selected according to the purpose. Examples thereof include silicone rubber particles, silicone resin particles, and silicone rubber-resin combined particles.

One of these may be used alone or two or more of these may be used alone as the polyolefin particles and the silicone particles.

The content of at least any of the polyolefin particles and the silicone particles is not particularly limited and may be appropriately selected according to the purpose. However, it is preferably from 2.5 parts by mass to 25 parts by mass relative to 100 parts by mass of the silicone resin, and more preferably from 4 parts by mass to 20 parts by mass in terms of the effect of reducing the power required to unroll from a roll, and the effect of improving the physical durability of a printed image. When the content of the particles is less than 2.5 parts by mass, the effect of reducing the power required to unroll from a roll may not be obtained sufficiently. When it is greater than 25 parts by mass, the power required to unroll from a roll may be increased.

### -Other Components-

As the other components, the releasing layer may appropriately contain various auxiliary agents such as silicone resin curing catalyst, dye, pigment, wetting agent, antifoamer, dispersant, antistat, leveling agent, lubricant, thickener, age inhibitor, and ultraviolet absorbent, within a range in which the desired effects are not inhibited.

The releasing layer can be formed by a method of printing a releasing layer coating liquid that contains the silicone resin, preferably contains the water-insoluble resin, and at least any of the polyolefin particles and the silicone particles, and contains other components according to necessity with various types of printers into a halftone dot pattern, a method of coating the releasing layer coating liquid with various types of coaters, etc. Among these, the method of coating the releasing layer coating liquid with a coater is preferable because it is highly productive.

The various types of printers and coaters are not particularly limited and may be appropriately selected according to the purpose. Examples thereof include brush coating, spray coating, screen printing, gravure printing, offset printing, letterpress printing, Mayer bar coater, kiss-roll coater, lip coater, direct roll coater, offset roll coater, gravure roll coater, reverse roll coater, rod coater, blade coater, air knife coater, slit die coater, and curtain coater.

The amount of coating of the releasing layer coating liquid is not particularly limited and may be appropriately selected according to the purpose. However, it is preferably from 0.1 g/m² to 10 g/m², more preferably from 0.5 g/m² to 7 g/m² in terms of the balance between the power required to unroll from a roll and the inkjet printing suitability, and particularly preferably from 1 g/m² to 5 g/m².

When the amount of coating is less than 0.1 g/m², the power required to unroll from a roll may be excessively large. When it is greater than 10 g/m², the ink absorbability may be poor and the inkjet printing suitability may be insufficient.

It is possible to efficiently form a releasing layer that is at least any of a discontinuous layer and an island-like scattered layer, by, after the releasing layer coating liquid is coated, drying it with a dryer and cross-linking the silicone resin.

### <Ink Receiving Layer>

The ink receiving layer contains a binder, preferably contains inorganic particles, and further contains other components according to necessity.

The ink receiving layer may be a single layer, or a multi-layer including 2 or more layers.

### - Binder-

The binder is not particularly limited and may be appropriately selected according to the purpose. Examples thereof include: emulsion of polyvinyl alcohol, diacetone-modified polyvinyl alcohol, itaconic acid-modified polyvinyl alcohol, carboxy-modified polyvinyl alcohol, starch or derivative thereof, cellulose derivative such as hydroxymethyl cellulose, methoxy cellulose, hydroxyethyl cellulose, carboxymethyl cellulose, methyl cellulose, and ethyl cellulose, water-soluble polymer such as polysodium acrylate, polyvinyl pyrrolidone, acrylamide-acrylic acid ester copolymer, acrylamide-acrylic acid ester-methacrylic acid terpolymer, alkali salt of styrene-maleic anhydride copolymer, alkali salt of isobutylene-maleic anhydride copolymer, polyacrylamide, sodium alginate, gelatin, and casein, polyvinyl acetate, polyurethane, polyacrylic acid, polyacrylic acid ester, polymethacrylic acid ester, vinyl chloride-vinyl acetate copolymer, polybutyl methacrylate, and ethylene-vinyl acetate copolymer; latex of styrene-butadiene copolymer and styrene-butadiene-acrylic based copolymer. One of these may be used alone, or two or more of these may be used in combination.

Among these, polyvinyl alcohols such as polyvinyl alcohol and modified polyvinyl alcohol are preferable in terms of adhesiveness with the inorganic particles and because these will make it easier to form a releasing layer that is a discontinuous layer or an island-like scattered layer. Polyvinyl alcohols having a degree of polymerization of 1,700 or greater are more preferable in terms of control of ink absorbability and smoothness of the ink receiving layer surface. Polyvinyl alcohols having a degree of polymerization of 2,500 or greater are particularly preferable.

### -Inorganic Particles-

The number average particle diameter of the inorganic particles is preferably from 0.1 µm to 0.5 µm, and more preferably from 0.1 µm to 0.3 µm in terms of the balance between the power required to unroll from a roll (separation power) and the inkjet recording suitability.

By providing the releasing layer on the surface of the ink receiving layer that contains the inorganic particles having a number average particle diameter of from 0.1 µm to 0.5 µm, it is possible to obtain an adhesive label that requires less power to be unrolled from a roll, has particularly excellent inkjet recording suitability with water-based inkjet ink, and is free from a paper liner. Furthermore, when forming a releasing layer on the surface of the ink receiving layer, it is easy to form the releasing layer that is at least any of a discontinuous layer and an island-like scattered layer.

This is estimated to be because the ink receiving layer containing inorganic particles having a number average particle diameter of from 0.1 µm to 0.5 µm has such a small pore diameter and smoothness as suitable for the releasing layer to be formed thereon, and this makes it possible for the releasing layer to be formed in a particularly preferable state, leading to efficient expression of the functionalities. It is also considered that such an ink receiving layer has favorable ink absorbability, and hence excellent inkjet recording suitability will be obtained.

When the number average particle diameter of the inorganic particles is less than 0.1 µm, the ink absorbability of the ink receiving layer may be poor, and the inkjet recording suitability may be poor. When it is greater than 0.5 µm, the releasing layer may be formed non-uniformly, and the power required to unroll from a roll may be increased.

Here, the number average particle diameter means average particle diameter of secondary particles of the inorganic particles, and is the average of projected area diameters of dispersed secondary particles (agglutinated particles) observed with an electron microscope. Here, projected area diameter is diameter of a circle that has the same area as the projected area of a particle. The number average particle diameter is a value obtained by observing the inorganic particles with an electron microscope at a magnification at which it is possible to discern the secondary particle diameter, obtaining the projected area diameter of each of 100 inorganic particles present in an arbitrary region having a predetermined area, and number-averaging the obtained projected area diameters.

The content of the inorganic particles having a number average particle diameter of from 0.1 µm to 0.5 is preferably 40% by mass or greater, and more preferably 70% by mass or greater relative to the total mass of the ink receiving layer. When the content is less than 40% by mass, the inkjet recording suitability may be poor, or the power required to unroll from a roll may be increased.

The inorganic particles having a number average particle diameter of from 0.1 µm to 0.5 µm are not particularly limited and may be appropriately selected according to the purpose. Examples thereof include: colorless or white particles of metal oxide such as amorphous synthetic silica, alumina, hydrated alumina, and titanium dioxide; calcium carbonate; and magnesium carbonate. Among these, amorphous synthetic silica, alumina, and hydrated alumina are particularly preferable in terms of ink absorbability.

The amorphous synthetic silica can be roughly classified into gas-phase silica, wet silica, and others. Gas-phase silica is preferable in terms of ink absorbability.

The gas-phase silica is also called dry silica opposed to wet silica, and generally synthesized by flame hydrolysis. Specifically, a synthetic method of burning silicon tetrachloride together with hydrogen and oxygen is commonly known. Instead of silicon tetrachloride, it is also possible to use silanes such as methyltrichlorosilane and trichlorosilane alone or in mixture with silicon tetrachloride. Commercially-available products can be used as the gas-phase silica. Examples of commercially-available products include AEROSIL manufactured by Nippon Aerosil Co., Ltd. and REOLOSIL manufactured by Tokuyama Corporation.

Gas-phase silica manufactured by an ordinary method has an average agglutinated particle diameter of 1 µm or greater. Therefore, it is used after finely pulverized. A preferable pulverizing method is wet dispersion of mechanically pulverizing silica dispersed in an aqueous medium.

Specifically, in order to finely pulverize the gas-phase silica, it may be possible to mix silica particles and a cationic compound in water (either one may be added first, or both may be added simultaneously), or alternatively, mix dispersion liquids of both of these or aqueous solution of both of these with each other, and obtain a preliminary dispersion liquid with at least one disperser such as saw-edged blade disperser, propeller blade disperser, and rotor stator disperser. Further, if necessary, it is possible to add a low boiling point solvent appropriately.

Next, the preliminary dispersion liquid of the gas-phase silica is subjected to a stronger mechanical means, to thereby obtain a gas-phase silica dispersion liquid having a number average particle diameter of from 0.1 µm to 0.5 µm. The mechanical means is not particularly limited and may be a publicly-known system. Examples thereof include media mill such as ball mill, beads bill, and sand grinder, pressure disperser such as high-pressure homogenizer and ultrahigh pressure homogenizer, ultrasonic disperser, and thin film rotation disperser.

The wet silica is further classified into precipitated silica, gel silica, and sol silica, depending on the manufacturing method.

The precipitated silica is manufactured by reacting sodium silicate and sulfuric acid under alkaline conditions, leading to agglutination and precipitation of grown silica particles. After this, the silica particles are filtered, washed with water, dried, pulverized, and classified to be completed as final product.

The precipitated silica may be a commercially-available product. Examples of commercially-available products include NIPSIL manufactured by Tosoh Silica Corporation and TOKUSIL manufactured by Tokuyama Corporation.

The gel silica is manufactured by reacting sodium silicate and sulfuric acid under acidic conditions. During aging, fine particles dissolve and reprecipitate by joining other primary particles. Therefore, apparent primary particles disappear, and relatively hard agglutinated particles having an internally void structure are formed. Examples of commercially-available products thereof include NIPGEL manufactured by Tosoh Silica Corporation, and SILOYD and SILOJET manufactured by Grace Japan Ltd.

The sol silica is also called colloidal silica, and manufactured by heating and aging silica sol obtained by double-decomposing sodium silicate with acid or passing sodium silicate through an ion-exchange resin layer. Examples of commercially-available products thereof include SNOWTEX manufactured by Nissan Chemical Industries, Ltd.

Precipitated silica and gel silica manufactured by ordinary methods have an average agglutinated particle diameter of 1 µm or greater. Therefore, they are used after finely pulverized.

A preferable pulverizing method is wet dispersion of mechanically pulverizing silica dispersed in an aqueous medium. Here, it is preferable to use precipitated silica having oil absorption of 210 mL/100 g or less and an average agglutinated particle diameter of 5 µm or greater, because a liquid in which such silica is dispersed will be suppressed from initial viscosity increase to thereby enable the silica to be dispersed at a high concentration and to be pulverized more finely with improved pulverization and dispersion efficiency. Use of a high-concentration dispersion liquid also improves productivity of recording sheets. The oil absorption is measured according to the description in JIS K-5101.

Specifically, in order to finely pulverize the precipitated silica and the gel silica, it may be possible to mix silica particles and a cationic compound in water (either one may be added first, or both may be added simultaneously), or alternatively, mix dispersion liquids of both of these or aqueous solution of both of these with each other, and obtain a preliminary dispersion liquid with at least one disperser such as saw-edged blade disperser, propeller blade disperser, and rotor stator disperser. Further, if necessary, it is possible to add a low boiling point solvent appropriately.

The preliminary dispersion of the precipitated silica and the gel silica is not particularly limited and may be appropriately selected according to the purpose. However, it preferably has a high solid content concentration. However, if the concentration is too high, the preliminary dispersion cannot be dispersed. Therefore, the concentration is preferably from 15% by mass to 40% by mass, and more preferably from 20% by mass to 35% by mass.

Next, the preliminary dispersion liquid is subjected to a stronger mechanical means, to thereby obtain a wet silica dispersion liquid having a number average particle diameter of from 0.1 µm to 0.5 µm.

The mechanical means is not particularly limited and may be a publicly-known system. Examples thereof include media mill such as ball mill, beads bill, and sand grinder, pressure disperser such as high-pressure homogenizer and ultrahigh pressure homogenizer, ultrasonic disperser, and thin film rotation disperser.

The alumina is not particularly limited and may be appropriately selected according to the purpose. However, it is preferably γ-alumina, which is γ-type crystal of aluminum oxide, and particularly preferably δ-group crystal. The γ-alumina can have a primary particle diameter as small as about 10 nm. However, particles typically used are secondary particle crystal having a diameter of several thousand nm to several ten thousand nm, which is then pulverized with ultrasonic, high pressure homogenizer, head-on collision jet pulverizer, etc.

The hydrated alumina is represented by a structural formula of Al₂O₃·nH₂O (n=1 to 3). When n is 1, the formula represents hydrated alumina having a boehmite structure. When n is less than 3 but greater than 1, the formula represents hydrated alumina having a pseudo boehmite structure. The hydrated alumina can be obtained by publicly-known manufacturing methods such as hydrolysis of aluminum alkoxide such as aluminum isopropoxide, neutralization of aluminum salt with alkali, and hydrolysis of aluminate.

The average primary particle diameter of the inorganic particles is not particularly limited and may be appropriately selected according to the purpose. However, it is preferably 30 nm or less, more preferably 15 nm or less in order to obtain higher glossiness, yet more preferably from 3 nm to 15 nm, and particularly preferably from 3 nm to 10 nm.

The average primary particle diameter is average particle diameter obtained by using as the particle diameter of the particles, the diameter of a circle having the same area as the projected area of each of 100 primary particles present in a region having a predetermined area observed with an electron microscope, and averaging the diameters.

The specific surface area of the inorganic particles according to BET method is not particularly limited and may be appropriately selected according to the purpose. However, it is preferably 200 m²/g or greater, and more preferably from 250 m²/g to 500 m²/g.

The BET method is one of surface area measuring methods using gas phase adsorption method, and obtains specific surface area, i.e., the total surface area that a sample of 1 g has, from adsorption isotherm. Typically, nitrogen gas is often used as adsorbed gas. A method of measuring the amount of adsorption based on changes of the pressure or volume of adsorption gas is most often used. The most famous method for plotting an isotherm is Brunauer Emmett Teller method, called BET method. This method is widely used for determination of surface area. The amount of adsorption is obtained based on BET method, and multiplied by the area occupied by one admolecule with its surface, to thereby obtain the surface area.

### -Cationic Compound-

A cationic compound may be added to the ink receiving layer for ink fixation.

The cationic compound is not particularly limited and may be appropriately selected according to the purpose. Examples thereof include: polyalkylene polyamines such as polyethylene amine and polypropylene polyamine or derivatives thereof; acrylic resin containing secondary amine group, tertiary amine group, or quaternary ammonium group; polyvinyl amine, polyvinyl amidine, and pentacyclic amidines; dicyan-based cationic resin represented by dicyandiamide-formalin polycondensate; polyamine-based cationic resin represented by dicyandiamide-diethylenetriamine polycondensate; epichlorohydrin-dimethylamine addition polymer; and aluminum salt such as dimethyldiallyl ammonium chloride-SO₂ copolymer, diallylamine-SO₂ copolymer, dimethyldiallyl ammonium chloride polymer, polymer of allylamine salt, dialkylaminoethyl (meth)acrylate quaternary salt polymer, acrylamide-diallylamine salt copolymer, polyaluminum chloride, polyaluminum acetate, and polyaluminum lactate. One of these may be used alone, or two or more of these may be used in combination.

The content of the cationic compound is not particularly limited and may be appropriately selected according to the purpose. However, it is preferably from1 part by mass to 30 parts by mass, and more preferably from 2 parts by mass to 15 parts by mass relative to 100 parts by mass of the inorganic particles.

### -Other Components-

As the other components, the ink receiving layer may contain various additives according to necessity. Examples of the additives include ultraviolet absorbent, antioxidant, fluorescent whitener, monomer, polymerization initiator, polymerization inhibitor, blot inhibitor, antiseptic, viscosity stabilizer, antifoamer, surfactant, antistat, matting agent, curling inhibitor, and water resistant additive.

The ink receiving layer can be formed by coating an ink receiving layer coating liquid that contains a binder, preferably contains inorganic particles, and further contains other components according to necessity. Examples of the coating method include brush coating, spray coating, screen printing, gravure printing, offset printing, letterpress printing, Mayer bar coater, kiss-roll coater, lip coater, direct roll coater, offset roll coater, gravure roll coater, reverse roll coater, rod coater, blade coater, air knife coater, slit die coater, and curtain coater.

The amount of coating of the ink receiving layer coating liquid is not particularly limited and may be appropriately selected according to the purpose. However, it is preferably from 1 g/m² to 30 g/m², more preferably from 3 g/m² to 25 g/m². When the amount of coating is less than 1 g/m², the inkjet printing suitability may be insufficient. When it is greater than 30 g/m², economical efficiency may be less, because the inkjet printing suitability will be more than necessary.

The ink receiving layer is not particularly limited and may be appropriately selected according to the purpose. However, the ink receiving layer is preferably surface-treated so as to wear matte, glossiness, super glossiness, etc.

### <Support Member>

The shape, structure, size, material, etc. of the support member are not particularly limited and may be appropriately selected according to the purpose. The shape may be, for example, a flat panel shape. The structure may be a single-layer structure or a multi-layer structure. The size may be appropriately selected according to the size, etc. of the adhesive label for inkjet recording.

The material of the support member is not particularly limited and may be appropriately selected according to the purpose. It is roughly classified into inorganic materials and organic materials. Examples of inorganic materials include glass, quartz, silicon, silicon oxide, aluminum oxide, SiO₂, and metal. Examples of organic materials include: paper such as high-quality paper (acid paper, neutralized paper), mid-quality paper, coated paper, art paper, glassine paper, laminated paper, and artificial paper; cellulose derivative such as cellulose triacetate; polyester resin such as polyethylene terephthalate (PET) and polybutylene terephthalate; polyolefin such as polycarbonate, polystyrene, polymethylmethacrylate, polyamide, polyethylene, and polypropylene. Among these, high-quality paper, coated paper, plastic film, and artificial paper are particularly preferable.

It is preferable to subject the support member to surface modification such as corona discharge treatment, oxidation reaction treatment (chromic acid, etc.), etching process, easy adhesion treatment, and antistatic treatment, with a view to improving the adhesiveness with the layer to be coated thereon. It is preferable to add white pigment such as titanium oxide to the support member.

The average thickness of the support member is not particularly limited and may be appropriately selected according to the purpose. However, it is preferably from 50 µm to 2,000 µm, and more preferably from 100 µm to 1,000 µm.

### <Adhesive Layer>

The adhesive layer is formed on a surface of the support member opposite to the surface on which the ink receiving layer is formed.

The adhesive of the adhesive layer is not particularly limited and may be appropriately selected according to the purpose. Examples thereof include various adhesives such as solvent adhesive, emulsion adhesive, and hot-melt adhesive.

The amount of coating of the adhesive is not particularly limited and may be appropriately selected according to the purpose. However, it is preferably from 5 g/m² to 50 g/m², and more preferably from 10 g/m² to 30 g/m², on a dry mass basis. When the amount of coating of the adhesive is less than 5 g/m², sufficient adhesiveness as a label may not be obtained. When it is greater than 50 g/m², economical efficiency may be less because the adhesiveness is saturated.

The method of coating the adhesiveness is not particularly limited and may be appropriately selected according to the purpose. Examples thereof include brush coating, spray coating, screen printing, gravure printing, offset printing, letterpress printing, Mayer bar coater, kiss-roll coater, lip coater, direct roll coater, offset roll coater, gravure roll coater, reverse roll coater, rod coater, blade coater, air knife coater, slit die coater, and curtain coater.

When drying is necessary after coating, it may be performed with a dryer. When radiation curing is necessary, radiation irradiator such as ultraviolet irradiator and electron beam irradiator may be appropriately used.

Instead of directly coating the surface of the support member opposite to the surface on which the ink receiving layer is formed with the adhesive, it is also possible to form the adhesive layer by a method of once coating process paper with the adhesive and drying the adhesive, after this, transferring the adhesive to the surface of the support member opposite to the surface on which the ink receiving layer is formed, and after this, separating and removing the process sheet.

### <Other Layers>

The other layers are not particularly limited and may be appropriately selected according to the purpose. Examples thereof include under layer and barrier layer.

The under layer may be provided between the support member and the ink receiving layer.

The barrier layer is provided on the surface of the support member on which the adhesive layer is to be formed, in order to reinforce the strength or to prevent degradation of the adhesiveness due to penetration of the adhesive into the support member.

### <Ink>

Ink used for the adhesive label for inkjet recording of the present invention is not particularly limited and may be appropriately selected according to the purpose. At least any of water-based ink and oil-based ink may be used. Water-based ink is particularly preferable.

Ink to be contained in the ink may be at least any of colorant such as dye and pigment, and materials having chromogenic property. Preferable examples of the dye to be used for inkjet recording include water-soluble dye represented by direct dye, acid dye, basic dye, reactive dye, and edible dye. Examples of the pigment include various carbon blacks, pigment yellow, pigment red, and pigment blue. Among these, ink containing pigment is particularly preferable because a high image density can be obtained and in terms of resistance to fading.

The structure of the adhesive label for inkjet recording of the present invention is not particularly limited and may be appropriately selected. Examples thereof include a roll structure, a sheet structure, and a film structure. Among these, a roll structure is preferable.

The adhesive label can be wound like a roll without the need for a paper liner to be stacked on the surface of the adhesive layer, and can be used by being unrolled. The surface to come out as the external surface of the roll is not particularly limited and may be appropriately selected according to the purpose. Either of the releasing layer side and the adhesive layer side may come out. A roll having the releasing layer side come to the external surface is more preferable, because handling is easier.

### Examples

Examples of the present invention will be explained below. The present invention is not limited to Examples below by any means.

### (Example 1)

### <Manufacture of Adhesive Label for Inkjet Recording>

### -Preparation of Inorganic Particle Dispersion Liquid A-

Polydiallyldimethyl ammonium chloride (SHALLOL DC-902P manufactured by Dai-Ichi Kogyo Seiyaku Co., Ltd., 51% by mass aqueous solution) (0.78 parts by mass) was dissolved in water (39.22 parts by mass), and gas-phase silica (product name: AEROSIL 300 manufactured by Nippon Aerosil Co., Ltd.) (10 parts by mass) was dispersed in the resulting solution. This dispersion liquid was processed with a high-pressure homogenizer to thereby prepare an inorganic particle dispersion liquid A with a solid content concentration of 20.8% by mass and an average particle diameter of 0.25 µm.

### -Preparation of Ink Receiving Layer Coating Liquid 1-

Water (31.4 parts by mass) was added to the inorganic particle dispersion liquid A (47.6 parts by mass), and a 10% by mass aqueous solution of acetoacetyl-modified polyvinyl alcohol (product name: GOHSEFIMER Z-410 manufactured by Nippon Synthetic Chemical Industry Co., Ltd.) (21.0 parts by mass) was mixed therewith, to thereby prepare an ink receiving layer coating liquid 1 having a solid content concentration of 12% by mass.

### -Formation of Ink Receiving Layer 1-

High-quality paper having a basis weight of 63 g/m² was used as the support member. One surface of the high-quality paper was coated with the ink receiving layer coating liquid 1 with a wire bar such that the amount of solid content coated would be 15 g/m². After this, the coated surface was irradiated with ultraviolet with a high-pressure mercury lamp in an integrated irradiation amount of 500 mJ/cm² measured with an integrating ultraviolet illuminometer (PD-365 manufactured by Eye Graphics Co., Ltd.), and dried with hot air of 120°C, to thereby form an ink receiving layer 1.

### -Preparation of Releasing Layer Coating Liquid 1-

The following compositions were mixed to prepare a releasing layer coating liquid 1 having a solid content concentration of 20% by mass.

### [Compositions]

- Silicone resin emulsion (product name: KM-3951 manufactured by Shin-Etsu Chemical Co., Ltd., solid content concentration of 40% by mass) ---47.6 parts by mass
- Silicone resin curing catalyst (product name: CAT-PM-10A manufactured by Shin-Etsu Chemical Co., Ltd., solid content concentration of 40% by mass) ---2.4 parts by mass
- Water ---50.0 parts by mass

### -Formation of Releasing Layer 1-

The surface of the formed ink receiving layer 1 was coated with the releasing layer coating liquid 1 with a wire bar such that the amount of solid content coated would be 3.0 g/m². Then, the coated surface is dried in an oven of 100°C for 10 minutes, to thereby form a releasing layer.

### -Formation of Adhesive Layer 1-

The surface of the support member on which the ink receiving layer is not provided was coated with a pressure-sensitive adhesive (acrylic emulsion, product name: BPW6111 manufactured by Toyo Ink Co., Ltd., solid content concentration of 60% by mass) such that the amount of solid content coated would be 15 g/m², and dried with hot air of 110°C, to thereby form an adhesive layer 1. In the way described above, the adhesive label for inkjet recording of Example 1 was manufactured.

Characteristics of the manufactured adhesive label for inkjet recording of Example 1 were evaluated as follows. The results are shown in Table 1.

### <Film Formed State and Coverage of Releasing Layer>

A SEM image of the recording surface of the manufactured adhesive label for inkjet recording that was captured with a scanning electron microscope (product name: S-3700N manufactured by Hitachi High Technologies Corporation) under the following conditions was observed at a magnification of x1,000, to thereby obtain a surface image.

### <Capturing Conditions>

- Detector: SE detector
- Accelerating voltage: 15 kV
- Working Distance: 10 mm
- Emission Current: 70 µA
- Probe Current: 50

The obtained surface image was obtained as a JPEG format image according to a standard-accessory operation program of the electron microscope. This image was loaded into an image processing software program [WIN ROOF VERSION 7.0.0, demo version (software for Windows personal computer) manufactured by Mitani Corporation], and with a "binarization process" command, binarized based on image brightness and discriminated into releasing layer portion and ink receiving layer portion. The threshold for binarization was manually adjusted to match the boundary between releasing layer portion and ink receiving layer portion that would be recognized when the surface image was visually observed. Next, with a "measurement" command, the area rate of the releasing layer portion was obtained as releasing layer coverage.

Further, from the obtained surface image and binarized image, the film formed state was evaluated based on the distribution of the releasing layer portion.

### <Separation Power>

Two adhesive labels for inkjet recording having a cut size of 20 mm in width and 100 mm in length were overlaid on each other such that a recording surface and an adhesive surface may contact each other, put on a flat panel, and pasted to each other with two times of pressure bonding applied from above at a speed of 10 mm/second with a rubber roller having a width of 20 mm and a mass of 2.6 kg. Sixty minutes after they were pasted, they were separated with a tensile tester (SV-55C manufactured by Imada-SS Corporation) under the conditions of a separation angle of 180 degrees and a separation speed of 300 mm/minute, to measure the separation power. Separation power per width of 1 cm was recorded for any sample that could be separated without breaking of the adhesive labels for inkjet recording. The unit of the separation power was N/cm. Any sample that caused breaking of the adhesive labels for inkjet recording during the separation test was recorded to that effect. It is more preferable if the value of the separation power is smaller, as the power required to unroll from the roll is small.

### <Inkjet Printing Suitability>

- Solid images of yellow, cyan, magenta, green, red, blue, and black were printed on the recording surface of the adhesive label for inkjet recording, with a commercially-available pigment inkjet printer (product name: GX E3300 manufactured by Ricoh Company Ltd.) and the genuine pigment inks for this inkjet printer (product names: GX CARTRIDGE CYAN GC31C, GX CARTRIDGE MAGENTA GC31M, GX CARTRIDGE YELLOW GC31Y, and GX CARTRIDGE BLACK GC31K manufactured by Ricoh Company Ltd.), under the conditions of paper type of high-grade regular paper, and print setting of "quick".

The printed state of a portion solidly printed with green by the inkjet printing was observed, and evaluated according to the following 5-grade values of from 1 to 5. A larger value indicates a better performance.

### [Evaluation Criteria]

5: The label was of a preferable level, with no printing unevenness at all.
4: The label was of a practically non-problematic level, although it had very minute granular unevenness.
3: The label had minute granular unevenness and was of a lowest practically usable level.
2: The label had large granular unevenness of 1 mm or greater in diameter, and was of a practically unusable level.
1: The label was of a practically unusable level, as the label could not absorb the ink and the contour of the image was collapsed.

### <Physical Durability of Image>

A portion solidly printed with black during the inkjet printing suitability test was scratched with filter paper back and forth five times with a clock meter (product name: CM-1 manufactured by Atlas Electric Devices Co.), and the state of the portion solidly printed with black was observed and evaluated according to the following 5-grade values of from 1 to 5. A larger value indicates a better image physical durability.

### [Evaluation Criteria]

5: The label was of a preferable level, with no peeling of ink at all, and with no ink adhesion to the filter paper.
4: The label was of a practically non-problematic level, with no image density degradation and with slight ink adhesion to the filter paper.
3: The label was of a slightly insufficient durability level, with image density degradation but with no exposure of the surface of the adhesive label for inkjet recording.
2: The label was of an insufficient durability level, with partial peeling of the ink to expose the surface of the adhesive label for inkjet recording.
1: The label was of a practically unusable level, with thorough peeling of the ink to expose the surface of the adhesive label for inkjet recording.

### (Example 2)

### <Manufacture of Adhesive Label for Inkjet Recording>

The adhesive label for inkjet recording of Example 2 was manufactured in the same manner as Example 1, except that the following releasing layer coating liquid 2 was used instead of the releasing layer coating liquid 1 of Example 1.

### -Preparation of Releasing Layer Coating Liquid 2-

The following compositions were mixed to prepare a releasing layer coating liquid 2 having a solid content concentration of 20% by mass.

### [Compositions]

- Silicone resin emulsion (product name: KM-3951 manufactured by Shin-Etsu Chemical Co., Ltd., solid content concentration of 40% by mass) ---45.0 parts by mass
- Silicone resin curing catalyst (product name: CAT-PM-10A manufactured by Shin-Etsu Chemical Co., Ltd., solid content concentration of 40% by mass) ---2.2 parts by mass
- Polyvinyl acetate emulsion (product name: MOVINYL 135N manufactured by Nippon Synthetic Chemical Industry Co., Ltd., solid content concentration of 35% by mass) --- 3.2 parts by mass
- Water ---49.6 parts by mass

### (Example 3)

### <Manufacture of Adhesive Label for Inkjet Recording>

The adhesive label for inkjet recording of Example 3 was manufactured in the same manner as Example 1, except that the following releasing layer coating liquid 3 was used instead of the releasing layer coating liquid 1 of Example 1.

### -Preparation of Releasing Layer Coating Liquid 3-

The following compositions were mixed to prepare a releasing layer coating liquid 3 having a solid content concentration of 20% by mass.

### [Compositions]

- Silicone resin emulsion (product name: KM-3951 manufactured by Shin-Etsu Chemical Co., Ltd., solid content concentration of 40% by mass) ---46.5 parts by mass
- Silicone resin curing catalyst (product name: CAT-PM-10A manufactured by Shin-Etsu Chemical Co., Ltd., solid content concentration of 40% by mass) ---2.3 parts by mass
- Polyvinyl acetate emulsion (product name: MOVINYL 135N manufactured by Nippon Synthetic Chemical Industry Co., Ltd., solid content concentration of 35% by mass) --- 1.3 parts by mass
- Water ---49.9 parts by mass

### (Example 4)

### <Manufacture of Adhesive Label for Inkjet Recording>

The adhesive label for inkjet recording of Example 4 was manufactured in the same manner as Example 1, except that the following releasing layer coating liquid 4 was used instead of the releasing layer coating liquid 1 of Example 1.

### -Preparation of Releasing Layer Coating Liquid 4-

The following compositions were mixed to prepare a releasing layer coating liquid 4 having a solid content concentration of 20% by mass.

### [Compositions]

- Silicone resin emulsion (product name: KM-3951 manufactured by Shin-Etsu Chemical Co., Ltd., solid content concentration of 40% by mass) ---42.6 parts by mass
- Silicone resin curing catalyst (product name: CAT-PM-10A manufactured by Shin-Etsu Chemical Co., Ltd., solid content concentration of 40% by mass) ---2.1 parts by mass
- Polyvinyl acetate emulsion (product name: MOVINYL 135N manufactured by Nippon Synthetic Chemical Industry Co., Ltd., solid content concentration of 35% by mass) ---6.1 parts by mass
- Water ---49.2 parts by mass

### (Example 5)

### <Manufacture of Adhesive Label for Inkjet Recording>

The adhesive label for inkjet recording of Example 5 was manufactured in the same manner as Example 1, except that the following releasing layer coating liquid 5 was used instead of the releasing layer coating liquid 1 of Example 1.

### -Preparation of Releasing Layer Coating Liquid 5-

The following compositions were mixed to prepare a releasing layer coating liquid 5 having a solid content concentration of 20% by mass.

### [Compositions]

- Silicone resin emulsion (product name: KM-3951 manufactured by Shin-Etsu Chemical Co., Ltd., solid content concentration of 40% by mass) ---45.0 parts by mass
- Silicone resin curing catalyst (product name: CAT-PM-10A manufactured by Shin-Etsu Chemical Co., Ltd., solid content concentration of 40% by mass) ---2.2 parts by mass
- Polyvinyl acetate emulsion (product name: MOVINYL 168N manufactured by Nippon Synthetic Chemical Industry Co., Ltd., solid content concentration of 50% by mass) --- 2.2 parts by mass
- Water ---50.6 parts by mass

### (Example 6)

### <Manufacture of Adhesive Label for Inkjet Recording>

The adhesive label for inkjet recording of Example 6 was manufactured in the same manner as Example 1, except that the following releasing layer coating liquid 6 was used instead of the releasing layer coating liquid 1 of Example 1.

### -Preparation of Releasing Layer Coating Liquid 6-

The following compositions were mixed to prepare a releasing layer coating liquid 6 having a solid content concentration of 20% by mass.

### [Compositions]

- Silicone resin emulsion (product name: KM-3951 manufactured by Shin-Etsu Chemical Co., Ltd., solid content concentration of 40% by mass) ---45.0 parts by mass
- Silicone resin curing catalyst (product name: CAT-PM-10A manufactured by Shin-Etsu Chemical Co., Ltd., solid content concentration of 40% by mass) ---2.2 parts by mass
- Ethylene-vinyl acetate copolymer emulsion (product name: MOVINYL 186E manufactured by Nippon Synthetic Chemical Industry Co., Ltd., solid content concentration of 55% by mass) --- 2.0 parts by mass
- Water ---50.8 parts by mass

Next, the characteristics of the manufactured adhesive labels for inkjet recording of Examples 2 to 6 were evaluated in the same manner as Example 1. The results are shown in Table 1.

**Table 1**

| | Film formed state | Coverage (%) | Separation power (N/cm) | Inkjet printing suitability | Physical durability of image |
|---|---|---|---|---|---|
| Ex. 1 | Discontinuous layer or island-like scattered layer | 25 | 1.79 | 4 | 4 |
| Ex. 2 | Discontinuous layer or island-like scattered layer | 46 | 0.72 | 4 | 4 |
| Ex. 3 | Discontinuous layer or island-like scattered layer | 31 | 1.25 | 5 | 4 |
| Ex. 4 | Discontinuous layer or island-like scattered layer | 40 | 0.92 | 4 | 4 |
| Ex. 5 | Discontinuous layer or island-like scattered layer | 34 | 1.22 | 5 | 4 |
| Ex. 6 | Discontinuous layer or island-like scattered layer | 30 | 1.37 | 5 | 4 |

From the results of Table 1, it was revealed that in Example 1 in which the releasing layer containing a silicone resin was formed as a discontinuous layer or an island-like scattered layer, the releasing layer could be separated from the adhesive layer without loss of the inkjet printing suitability. Further, the formed image hardly peeled when scratched, and proved that it had sufficient physical durability for practical use.

Further, in Examples 2 to 6 in which the releasing layer contained a silicone resin, and in addition, polyvinyl acetate or ethylene-vinyl acetate copolymer, the inkjet printing suitability was equal or greater, and the physical durability of the image was equal, while the separation power was less, compared with Example 1. It was revealed that addition of polyvinyl acetate or ethylene-vinyl acetate copolymer enabled reduction of the separation power without sacrificing the inkjet printing suitability and physical durability of the image.

### (Example 7)

### <Manufacture of Adhesive Label for Inkjet Recording>

The adhesive label for inkjet recording of Example 7 was manufactured in the same manner as Example 1, except that the following releasing layer coating liquid 7 was used instead of the releasing layer coating liquid 1 of Example 1.

### -Preparation of Releasing Layer Coating Liquid 7-

The following compositions were mixed to prepare a releasing layer coating liquid 7 having a solid content concentration of 20% by mass.

### [Compositions]

- Silicone resin emulsion (product name: KM-3951 manufactured by Shin-Etsu Chemical Co., Ltd., solid content concentration of 40% by mass) ---45.0 parts by mass
- Silicone resin curing catalyst (product name: CAT-PM-10A manufactured by Shin-Etsu Chemical Co., Ltd., solid content concentration of 40% by mass) ---2.2 parts by mass

- Acrylic-modified organopolysiloxane emulsion (product name: CHALINE FE-230N manufactured by Nissin Chemical Industry Co., Ltd., solid content concentration of 30% by mass) --- 3.7 parts by mass
- Water ---49.1 parts by mass

### (Example 8)

### <Manufacture of Adhesive Label for Inkjet Recording>

The adhesive label for inkjet recording of Example 8 was manufactured in the same manner as Example 1, except that the following releasing layer coating liquid 8 was used instead of the releasing layer coating liquid 1 of Example 1.

### -Preparation of Releasing Layer Coating Liquid 8-

The following compositions were mixed to prepare a releasing layer coating liquid 8 having a solid content concentration of 20% by mass.

### [Compositions]

- Silicone resin emulsion (product name: KM-3951 manufactured by Shin-Etsu Chemical Co., Ltd., solid content concentration of 40% by mass) ---46.5 parts by mass
- Silicone resin curing catalyst (product name: CAT-PM-10A manufactured by Shin-Etsu Chemical Co., Ltd., solid content concentration of 40% by mass) ---2.3 parts by mass
- Acrylic-modified organopolysiloxane emulsion (product name: CHALINE FE-230N manufactured by Nissin Chemical Industry Co., Ltd., solid content concentration of 30% by mass) --- 1.6 parts by mass
- Water ---49.6 parts by mass

### (Example 9)

### <Manufacture of Adhesive Label for Inkjet Recording>

The adhesive label for inkjet recording of Example 9 was manufactured in the same manner as Example 1, except that the following releasing layer coating liquid 9 was used instead of the releasing layer coating liquid 1 of Example 1.

### -Preparation of Releasing Layer Coating Liquid 9-

The following compositions were mixed to prepare a releasing layer coating liquid 9 having a solid content concentration of 20% by mass.

### [Compositions]

- Silicone resin emulsion (product name: KM-3951 manufactured by Shin-Etsu Chemical Co., Ltd., solid content concentration of 40% by mass) ---42.6 parts by mass
- Silicone resin curing catalyst (product name: CAT-PM-10A manufactured by Shin-Etsu Chemical Co., Ltd., solid content concentration of 40% by mass) ---2.1 parts by mass
- Acrylic-modified organopolysiloxane emulsion (product name: CHALINE FE-230N manufactured by Nissin Chemical Industry Co., Ltd., solid content concentration of 30% by mass) --- 7.1 parts by mass
- Water ---48.2 parts by mass

### (Example 10)

### <Manufacture of Adhesive Label for Inkjet Recording>

The adhesive label for inkjet recording of Example 10 was manufactured in the same manner as Example 1, except that the following releasing layer coating liquid 10 was used instead of the releasing layer coating liquid 1 of Example 1.

### -Preparation of Releasing Layer Coating Liquid 10-

The following compositions were mixed to prepare a releasing layer coating liquid 10 having a solid content concentration of 20% by mass.

### [Compositions]

- Silicone resin emulsion (product name: KM-3951 manufactured by Shin-Etsu Chemical Co., Ltd., solid content concentration of 40% by mass) ---45.0 parts by mass
- Silicone resin curing catalyst (product name: CAT-PM-10A manufactured by Shin-Etsu Chemical Co., Ltd., solid content concentration of 40% by mass) ---2.2 parts by mass
- Acrylic-modified organopolysiloxane emulsion (product name: CHALINE R-170EM manufactured by Nissin Chemical Industry Co., Ltd., solid content concentration of 46% by mass) --- 2.5 parts by mass
- Water ---50.3 parts by mass

Next, characteristics of the adhesive labels for inkjet recording of Examples 7 to 10 were evaluated in the same manner as Example 1.
The results are shown in Table 2.

**Table 2**

| | Film formed state | Coverage (%) | Separation power (N/cm) | Inkjet printing suitability | Physical durability of image |
|---|---|---|---|---|---|
| Ex. 7 | Discontinuous layer or island-like scattered layer | 43 | 0.81 | 4 | 4 |
| Ex. 8 | Discontinuous layer or island-like scattered layer | 32 | 1.31 | 5 | 4 |
| Ex. 9 | Discontinuous layer or island-like scattered layer | 33 | 1.15 | 4 | 4 |
| Ex. 10 | Discontinuous layer or island-like scattered layer | 29 | 1.43 | 5 | 4 |

From the results of Table 2, it was revealed that in Examples 7 to 10 in which the releasing layer contained acrylic-modified organopolysiloxane emulsion in addition to a silicone resin, the inkjet printing suitability was equal or greater, and the physical durability of the image was also equal, while the separation power was much less, compared with Example 1. It was revealed that addition of acrylic-modified organopolysiloxane emulsion enabled reduction of the separation power without sacrificing the inkjet printing suitability and physical durability of the image.

### (Example 11)

### <Manufacture of Adhesive Label for Inkjet Recording>

The adhesive label for inkjet recording of Example 11 was manufactured in the same manner as Example 1, except that the following releasing layer coating liquid 11 was used instead of the releasing layer coating liquid 1 of Example 1.

### -Preparation of Releasing Layer Coating Liquid 11-

The following compositions were mixed to prepare a releasing layer coating liquid 11 having a solid content concentration of 20% by mass.

### [Compositions]

- Silicone resin emulsion (product name: KM-3951 manufactured by Shin-Etsu Chemical Co., Ltd., solid content concentration of 40% by mass) ---42.6 parts by mass
- Silicone resin curing catalyst (product name: CAT-PM-10A manufactured by Shin-Etsu Chemical Co., Ltd., solid content concentration of 40% by mass) ---2.1 parts by mass
- Acrylic-based copolymer emulsion (product name: BONRON S-415 manufactured by Mitsui Chemicals Inc., solid content concentration of 44% by mass) --- 2.4 parts by mass
- Water ---52.9 parts by mass

### (Example 12)

### <Manufacture of Adhesive Label for Inkjet Recording>

The adhesive label for inkjet recording of Example 12 was manufactured in the same manner as Example 1, except that the following releasing layer coating liquid 12 was used instead of the releasing layer coating liquid 1 of Example 1.

### -Preparation of Releasing Layer Coating Liquid 12-

The following compositions were mixed to prepare a releasing layer coating liquid 12 having a solid content concentration of 20% by mass.

### [Compositions]

- Silicone resin emulsion (product name: KM-3951 manufactured by Shin-Etsu Chemical Co., Ltd., solid content concentration of 40% by mass) ---46.5 parts by mass
- Silicone resin curing catalyst (product name: CAT-PM-10A manufactured by Shin-Etsu Chemical Co., Ltd., solid content concentration of 40% by mass) ---2.3 parts by mass
- Acrylic-based copolymer emulsion (product name: BONRON S-415 manufactured by Mitsui Chemicals Inc., solid content concentration of 44% by mass) --- 1.1 parts by mass
- Water ---50.1 parts by mass

### (Example 13)

### <Manufacture of Adhesive Label for Inkjet Recording>

The adhesive label for inkjet recording of Example 13 was manufactured in the same manner as Example 1, except that the following releasing layer coating liquid 13 was used instead of the releasing layer coating liquid 1 of Example 1.

### -Preparation of Releasing Layer Coating Liquid 13-

The following compositions were mixed to prepare a releasing layer coating liquid 13 having a solid content concentration of 20% by mass.

### [Compositions]

- Silicone resin emulsion (product name: KM-3951 manufactured by Shin-Etsu Chemical Co., Ltd., solid content concentration of 40% by mass) ---42.6 parts by mass
- Silicone resin curing catalyst (product name: CAT-PM-10A manufactured by Shin-Etsu Chemical Co., Ltd., solid content concentration of 40% by mass) ---2.1 parts by mass
- Acrylic-based copolymer emulsion (product name: BONRON S-415 manufactured by Mitsui Chemicals Inc., solid content concentration of 44% by mass) --- 4.8 parts by mass
- Water ---50.5 parts by mass

### (Example 14)

### <Manufacture of Adhesive Label for Inkjet Recording>

The adhesive label for inkjet recording of Example 14 was manufactured in the same manner as Example 1, except that the following releasing layer coating liquid 14 was used instead of the releasing layer coating liquid 1 of Example 1.

### -Preparation of Releasing Layer Coating Liquid 14-

The following compositions were mixed to prepare a releasing layer coating liquid 14 having a solid content concentration of 20% by mass.

### [Compositions]

- Silicone resin emulsion (product name: KM-3951 manufactured by Shin-Etsu Chemical Co., Ltd., solid content concentration of 40% by mass) ---45.0 parts by mass
- Silicone resin curing catalyst (product name: CAT-PM-10A manufactured by Shin-Etsu Chemical Co., Ltd., solid content concentration of 40% by mass) ---2.2 parts by mass
- Acrylic-based copolymer emulsion (product name: BONRON S-1294 manufactured by Mitsui Chemicals Inc., solid content concentration of 40% by mass) --- 2.8 parts by mass
- Water ---50.0 parts by mass

Next, characteristics of the adhesive labels for inkjet recording of Examples 11 to 14 were evaluated in the same manner as Example 1. The results are shown in Table 3.

**Table 3**

| | Film formed state | Coverage (%) | Separation power (N/cm) | Inkjet printing suitability | Physical durability of image |
|---|---|---|---|---|---|
| Ex. 11 | Discontinuous layer or island-like scattered layer | 60 | 0.66 | 3 | 4 |
| Ex. 12 | Discontinuous layer or island-like scattered layer | 31 | 1.21 | 4 | 4 |
| Ex. 13 | Discontinuous layer or island-like scattered layer | 52 | 0.90 | 3 | 4 |
| Ex. 14 | Discontinuous layer or island-like scattered layer | 30 | 1.35 | 3 | 4 |

From the results of Table 3, it was revealed that in Examples 11 to 14 in which the releasing layer contained acrylic-based copolymer emulsion in addition to a silicone resin, the physical durability of the image was equal, while the separation power was much less, compared with Example 1. Further, except Example 12 in which the additive amount of the acrylic-based copolymer emulsion was small, the inkjet printing suitability was inferior to Example 1 but was of a practically usable level.

### (Example 15)

### <Manufacture of Adhesive Label for Inkjet Recording>

The adhesive label for inkjet recording of Example 15 was manufactured in the same manner as Example 1, except that the following releasing layer coating liquid 15 was used instead of the releasing layer coating liquid 1 of Example 1.

### -Preparation of Releasing Layer Coating Liquid 15-

The following compositions were mixed to prepare a releasing layer coating liquid 15 having a solid content concentration of 20% by mass.

### [Compositions]

- Silicone resin emulsion (product name: KM-3951 manufactured by Shin-Etsu Chemical Co., Ltd., solid content concentration of 40% by mass) ---40.4 parts by mass
- Silicone resin curing catalyst (product name: CAT-PM-10A manufactured by Shin-Etsu Chemical Co., Ltd., solid content concentration of 40% by mass) ---2.0 parts by mass
- Polyvinyl acetate emulsion (product name: MOVINYL 168N manufactured by Nippon Synthetic Chemical Industry Co., Ltd., solid content concentration of 50% by mass) --- 2.0 parts by mass
- Polyethylene particle dispersion (product name: CHEMIPEARL W410 manufactured by Mitsui Chemicals, Inc., solid content concentration of 40% by mass) ---5.1 parts by mass
- Water ---50.5 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) was 10 µm.

### (Example 16)

### <Manufacture of Adhesive Label for Inkjet Recording>

The adhesive label for inkjet recording of Example 16 was manufactured in the same manner as Example 1, except that the following releasing layer coating liquid 16 was used instead of the releasing layer coating liquid 1 of Example 1.

### -Preparation of Releasing Layer Coating Liquid 16-

The following compositions were mixed to prepare a releasing layer coating liquid 16 having a solid content concentration of 20% by mass.

### [Compositions]

- Silicone resin emulsion (product name: KM-3951 manufactured by Shin-Etsu Chemical Co., Ltd., solid content concentration of 40% by mass) ---44.0 parts by mass
- Silicone resin curing catalyst (product name: CAT-PM-10A manufactured by Shin-Etsu Chemical Co., Ltd., solid content concentration of 40% by mass) ---2.2 parts by mass
- Polyvinyl acetate emulsion (product name: MOVINYL 168N manufactured by Nippon Synthetic Chemical Industry Co., Ltd., solid content concentration of 50% by mass) --- 2.2 parts by mass
- Polyethylene particle dispersion (product name: CHEMIPEARL W410 manufactured by Mitsui Chemicals, Inc., solid content concentration of 40% by mass) ---1.1 parts by mass
- Water ---50.5 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) was 10 µm.

### (Example 17)

### <Manufacture of Adhesive Label for Inkjet Recording>

The adhesive label for inkjet recording of Example 17 was manufactured in the same manner as Example 1, except that the following releasing layer coating liquid 17 was used instead of the releasing layer coating liquid 1 of Example 1.

### -Preparation of Releasing Layer Coating Liquid 17-

The following compositions were mixed to prepare a releasing layer coating liquid 17 having a solid content concentration of 20% by mass.

### [Compositions]

- Silicone resin emulsion (product name: KM-3951 manufactured by Shin-Etsu Chemical Co., Ltd., solid content concentration of 40% by mass) ---36.7 parts by mass
- Silicone resin curing catalyst (product name: CAT-PM-10A manufactured by Shin-Etsu Chemical Co., Ltd., solid content concentration of 40% by mass) ---1.8 parts by mass
- Polyvinyl acetate emulsion (product name: MOVINYL 168N manufactured by Nippon Synthetic Chemical Industry Co., Ltd., solid content concentration of 50% by mass) --- 1.8 parts by mass
- Polyethylene particle dispersion (product name: CHEMIPEARL W410 manufactured by Mitsui Chemicals, Inc., solid content concentration of 40% by mass) ---9.2 parts by mass
- Water ---50.5 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) was 10 µm.

### (Example 18)

### <Manufacture of Adhesive Label for Inkjet Recording>

The adhesive label for inkjet recording of Example 18 was manufactured in the same manner as Example 1, except that the following releasing layer coating liquid 18 was used instead of the releasing layer coating liquid 1 of Example 1.

### -Preparation of Releasing Layer Coating Liquid 18-

The following compositions were mixed to prepare a releasing layer coating liquid 18 having a solid content concentration of 20% by mass.

### [Compositions]

- Silicone resin emulsion (product name: KM-3951 manufactured by Shin-Etsu Chemical Co., Ltd., solid content concentration of 40% by mass) ---40.4 parts by mass
- Silicone resin curing catalyst (product name: CAT-PM-10A manufactured by Shin-Etsu Chemical Co., Ltd., solid content concentration of 40% by mass) ---2.0 parts by mass
- Acrylic-modified organopolysiloxane emulsion (product name: CHALINE R-170EM manufactured by Nissin Chemical Industry Co., Ltd., solid content concentration of 46% by mass) --- 2.2 parts by mass
- Polyethylene particle dispersion (product name: CHEMIPEARL W410 manufactured by Mitsui Chemicals, Inc., solid content concentration of 40% by mass) ---5.1 parts by mass
- Water ---50.3 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) was 10 µm.

### (Example 19)

### <Manufacture of Adhesive Label for Inkjet Recording>

The adhesive label for inkjet recording of Example 19 was manufactured in the same manner as Example 1, except that the following releasing layer coating liquid 19 was used instead of the releasing layer coating liquid 1 of Example 1.

### -Preparation of Releasing Layer Coating Liquid 19-

The following compositions were mixed to prepare a releasing layer coating liquid 19 having a solid content concentration of 20% by mass.

### [Compositions]

- Silicone resin emulsion (product name: KM-3951 manufactured by Shin-Etsu Chemical Co., Ltd., solid content concentration of 40% by mass) ---40.4 parts by mass
- Silicone resin curing catalyst (product name: CAT-PM-10A manufactured by Shin-Etsu Chemical Co., Ltd., solid content concentration of 40% by mass) ---2.0 parts by mass
- Acrylic-based copolymer emulsion (product name: BONRON S-1294 manufactured by Mitsui Chemicals Inc., solid content concentration of 40% by mass) --- 2.5 parts by mass
- Polyethylene particle dispersion (product name: CHEMIPEARL W410 manufactured by Mitsui Chemicals, Inc., solid content concentration of 40% by mass) ---5.1 parts by mass
- Water ---50.0 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) was 10 µm.

### (Example 20)

### <Manufacture of Adhesive Label for Inkjet Recording>

The adhesive label for inkjet recording of Example 20 was manufactured in the same manner as Example 1, except that the following releasing layer coating liquid 20 was used instead of the releasing layer coating liquid 1 of Example 1.

### -Preparation of Releasing Layer Coating Liquid 20-

The following compositions were mixed to prepare a releasing layer coating liquid 20 having a solid content concentration of 20% by mass.

### [Compositions]

- Silicone resin emulsion (product name: KM-3951 manufactured by Shin-Etsu Chemical Co., Ltd., solid content concentration of 40% by mass) ---38.5 parts by mass
- Silicone resin curing catalyst (product name: CAT-PM-10A manufactured by Shin-Etsu Chemical Co., Ltd., solid content concentration of 40% by mass) ---1.9 parts by mass
- Polyvinyl acetate emulsion (product name: MOVINYL 168N manufactured by Nippon Synthetic Chemical Industry Co., Ltd., solid content concentration of 50% by mass) --- 1.9 parts by mass
- Acrylic-modified organopolysiloxane emulsion (product name: CHALINE R-170EM manufactured by Nissin Chemical Industry Co., Ltd., solid content concentration of 46% by mass) ---2.1 parts by mass
- Polyethylene particle dispersion (product name: CHEMIPEARL W410 manufactured by Mitsui Chemicals, Inc., solid content concentration of 40% by mass) ---4.8 parts by mass
- Water ---50.8 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) was 10 µm.

Next, characters of the adhesive labels for inkjet recording of Examples 15 to 20 were evaluated in the same manner as Example 1. The results are shown in Table 4.

**Table 4**

| | Film formed state | Coverage (%) | Separation power (N/cm) | Inkjet printing suitability | Physical durability of image |
|---|---|---|---|---|---|
| Ex. 15 | Discontinuous layer or island-like scattered layer | 37 | 1.02 | 5 | 5 |
| Ex. 16 | Discontinuous layer or island-like scattered layer | 34 | 1.10 | 5 | 4 |
| Ex. 17 | Discontinuous layer or island-like scattered layer | 35 | 1.15 | 5 | 5 |
| Ex. 18 | Discontinuous layer or island-like scattered layer | 30 | 1.22 | 5 | 5 |
| Ex. 19 | Discontinuous layer or island-like scattered layer | 32 | 1.15 | 5 | 5 |
| Ex. 20 | Discontinuous layer or island-like scattered layer | 49 | 0.31 | 5 | 5 |

From the results of Table 4, it was revealed that in Examples 15 to 17 in which the releasing layer contained polyvinyl acetate and polyethylene particles having a volume average particle diameter of from 3 µm to 15 µm, the inkjet printing suitability was equal, the physical durability of the image was equal or greater, and the separation power was less, compared with Example 5 in which polyethylene particles were not contained. Likewise, in Example 18 in which polyethylene particles having a volume average particle diameter of from 3 µm to 15 µm and acrylic-modified organopolysiloxane were contained, and in Example 19 in which acrylic-based copolymer was contained, the inkjet printing suitability was equal or greater, the physical durability of the image was equal or greater, and the separation power was less, compared with Examples 10 and 14 in which polyethylene particles were not contained. Particularly, Example 19 in which acrylic-based copolymer was contained revealed that addition of polyethylene particles having a volume average particle diameter of from 3 µm to 15 µm greatly improved the inkjet printing suitability. Example 20 in which polyvinyl acetate, acrylic-modified organopolysiloxane, and polyethylene particles having a volume average particle diameter of from 3 µm to 15 µm was revealed to be particularly excellent, having high inkjet printing suitability, physical durability of the image, and very low separation power at the same time.

### (Example 21)

### <Manufacture of Adhesive Label for Inkjet Recording>

The adhesive label for inkjet recording of Example 21 was manufactured in the same manner as Example 1, except that the following releasing layer coating liquid 21 was used instead of the releasing layer coating liquid 1 of Example 1.

### -Preparation of Releasing Layer Coating Liquid 21-

The following compositions were mixed to prepare a releasing layer coating liquid 21 having a solid content concentration of 20% by mass.

### [Compositions]

- Silicone resin emulsion (product name: KM-3951 manufactured by Shin-Etsu Chemical Co., Ltd., solid content concentration of 40% by mass) ---40.4 parts by mass
- Silicone resin curing catalyst (product name: CAT-PM-10A manufactured by Shin-Etsu Chemical Co., Ltd., solid content concentration of 40% by mass) ---2.0 parts by mass
- Polyvinyl acetate emulsion (product name: MOVINYL 168N manufactured by Nippon Synthetic Chemical Industry Co., Ltd., solid content concentration of 50% by mass) --- 2.0 parts by mass
- Polyethylene particle dispersion (product name: CHEMIPEARL W300 manufactured by Mitsui Chemicals, Inc., solid content concentration of 40% by mass) ---5.1 parts by mass
- Water ---50.5 parts by mass

The volume average particle diameter of the polyethylene particles (product name: CHEMIPEARL W300 manufactured by Mitsui Chemicals, Inc.) measured with a laser diffraction/scattering particle size distribution meter (product name: LA-720 manufactured by Horiba Ltd.) was 3 µm.

### (Example 22)

### <Manufacture of Adhesive Label for Inkjet Recording>

The adhesive label for inkjet recording of Example 22 was manufactured in the same manner as Example 1, except that the following releasing layer coating liquid 22 was used instead of the releasing layer coating liquid 1 of Example 1.

### -Preparation of Releasing Layer Coating Liquid 22-

The following compositions were mixed to prepare a releasing layer coating liquid 22 having a solid content concentration of 20% by mass.

### [Compositions]

- Silicone resin emulsion (product name: KM-3951 manufactured by Shin-Etsu Chemical Co., Ltd., solid content concentration of 40% by mass) ---40.4 parts by mass
- Silicone resin curing catalyst (product name: CAT-PM-10A manufactured by Shin-Etsu Chemical Co., Ltd., solid content concentration of 40% by mass) ---2.0 parts by mass
- Polyvinyl acetate emulsion (product name: MOVINYL 168N manufactured by Nippon Synthetic Chemical Industry Co., Ltd., solid content concentration of 50% by mass) --- 2.0 parts by mass
- Silicone particles (product name: KMP-598manufactured by Shin-Etsu Chemical Co., Ltd.) ---2.0 parts by mass
- Water ---53.6 parts by mass

The volume average particle diameter of the silicone particles (product name: KMP-598 manufactured by Shin-Etsu Chemical Co., Ltd.) measured with a laser diffraction/scattering particle size distribution meter (product name: LA-720 manufactured by Horiba Ltd.) was 14 µm.

Next, characteristics of the adhesive labels for inkjet recording of Examples 21 and 22 were evaluated in the same manner as Example 1. The results are shown in Table 5.

**Table 5**

| | Film formed state | Coverage (%) | Separation power (N/cm) | Inkjet printing suitability | Physical durability of image |
|---|---|---|---|---|---|
| Ex. 21 | Discontinuous layer or island-like scattered layer | 37 | 1.04 | 5 | 4 |
| Ex. 22 | Discontinuous layer or island-like scattered layer | 40 | 0.91 | 5 | 5 |

From the results of Table 5, it was revealed that in Example 21 in which polyolefin particles having a volume average particle diameter of 3 µm were contained, the inkjet printing suitability and the physical durability of the image were equal, while the separation power was less, compared with Example 5 in which polyolefin particles were not contained. Also in Example 22 in which silicone particles having a volume average particle diameter of 14 µm were contained instead of polyolefin particles, the physical durability of the image was greater, and the separation power was less, compared with Example 5. It was revealed that less separation power could be achieved with the releasing layer containing polyolefin particles or silicone particles having a volume average particle diameter of from 3 µm to 15 µm.

### (Example 23)

### <Manufacture of Adhesive Label for Inkjet Recording>

The adhesive label for inkjet recording of Example 23 was manufactured in the same manner as Example 1, except that the following releasing layer coating liquid 23 was used instead of the releasing layer coating liquid 1 of Example 1.

### -Preparation of Releasing Layer Coating Liquid 23-

The following compositions were mixed to prepare a releasing layer coating liquid 23 having a solid content concentration of 20% by mass.

### [Compositions]

- Silicone resin emulsion (product name: DEHESIVE 430 manufactured by Wacker Asahikasei Silicone Co., Ltd., solid content concentration of 50% by mass) ---40.0 parts by mass
- Water ---60.6 parts by mass

### (Example 24)

### <Manufacture of Adhesive Label for Inkjet Recording>

The adhesive label for inkjet recording of Example 24 was manufactured in the same manner as Example 1, except that the following releasing layer coating liquid 24 was used instead of the releasing layer coating liquid 1 of Example 1.

### -Preparation of Releasing Layer Coating Liquid 24-

The following compositions were mixed to prepare a releasing layer coating liquid 24 having a solid content concentration of 20% by mass.

### [Compositions]

- Silicone resin emulsion (product name: DEHESIVE 430 manufactured by Wacker Asahikasei Silicone Co., Ltd., solid content concentration of 50% by mass) ---37.6 parts by mass
- Polyvinyl acetate emulsion (product name: MOVINYL 168N manufactured by Nippon Synthetic Chemical Industry Co., Ltd., solid content concentration of 50% by mass) --- 2.4 parts by mass
- Water ---60.0 parts by mass

### (Example 25)

### <Manufacture of Adhesive Label for Inkjet Recording>

The adhesive label for inkjet recording of Example 25 was manufactured in the same manner as Example 1, except that the following releasing layer coating liquid 25 was used instead of the releasing layer coating liquid 1 of Example 1.

### -Preparation of Releasing Layer Coating Liquid 25-

The following compositions were mixed to prepare a releasing layer coating liquid 25 having a solid content concentration of 20% by mass.

### [Compositions]

- Silicone resin emulsion (product name: DEHESIVE 430 manufactured by Wacker Asahikasei Silicone Co., Ltd., solid content concentration of 50% by mass) ---37.6 parts by mass
- Acrylic-modified organopolysiloxane emulsion (product name: CHALINE R-170EM manufactured by Nissin Chemical Industry Co., Ltd., solid content concentration of 46% by mass) ---2.6 parts by mass
- Water ---59.8 parts by mass

### (Example 26)

### <Manufacture of Adhesive Label for Inkjet Recording>

The adhesive label for inkjet recording of Example 26 was manufactured in the same manner as Example 1, except that the following releasing layer coating liquid 26 was used instead of the releasing layer coating liquid 1 of Example 1.

### -Preparation of Releasing Layer Coating Liquid 26-

The following compositions were mixed to prepare a releasing layer coating liquid 26 having a solid content concentration of 20% by mass.

### [Compositions]

- Silicone resin emulsion (product name: DEHESIVE 430 manufactured by Wacker Asahikasei Silicone Co., Ltd., solid content concentration of 50% by mass) ---33.7 parts by mass
- Polyvinyl acetate emulsion (product name: MOVINYL 168N manufactured by Nippon Synthetic Chemical Industry Co., Ltd., solid content concentration of 50% by mass) --- 2.1 parts by mass
- Polyethylene particle dispersion (product name: CHEMIPEARL W410 manufactured by Mitsui Chemicals, Inc., solid content concentration of 40% by mass) ---5.3 parts by mass
- Water ---58.9 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) was 10 µm.

### (Example 27)

### <Manufacture of Adhesive Label for Inkjet Recording>

The adhesive label for inkjet recording of Example 27 was manufactured in the same manner as Example 1, except that the following releasing layer coating liquid 27 was used instead of the releasing layer coating liquid 1 of Example 1.

### -Preparation of Releasing Layer Coating Liquid 27-

The following compositions were mixed to prepare a releasing layer coating liquid 27 having a solid content concentration of 20% by mass.

### [Compositions]

- Silicone resin emulsion (product name: DEHESIVE 430 manufactured by Wacker Asahikasei Silicone Co., Ltd., solid content concentration of 50% by mass) ---32.0 parts by mass
- Polyvinyl acetate emulsion (product name: MOVINYL 168N manufactured by Nippon Synthetic Chemical Industry Co., Ltd., solid content concentration of 50% by mass) --- 2.0 parts by mass
- Acrylic-modified organopolysiloxane emulsion (product name: CHALINE R-170EM manufactured by Nissin Chemical Industry Co., Ltd., solid content concentration of 46% by mass) ---2.2 parts by mass

- Polyethylene particle dispersion (product name: CHEMIPEARL W410 manufactured by Mitsui Chemicals, Inc., solid content concentration of 40% by mass) ---5.0 parts by mass
- Water ---58.8 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) was 10 µm.

Next, characteristics of the adhesive labels for inkjet recording of Examples 23 to 27 were evaluated in the same manner as Example 1. The results are shown in Table 6.

**Table 6**

| | Film formed state | Coverage (%) | Separation power (N/cm) | Inkjet printing suitability | Physical durability of image |
|---|---|---|---|---|---|
| Ex. 23 | Discontinuous layer or island-like scattered layer | 21 | 1.83 | 4 | 4 |
| Ex. 24 | Discontinuous layer or island-like scattered layer | 34 | 1.13 | 5 | 4 |
| Ex. 25 | Discontinuous layer or island-like scattered layer | 30 | 1.38 | 5 | 4 |
| Ex. 26 | Discontinuous layer or island-like scattered layer | 35 | 1.04 | 5 | 5 |
| Ex. 27 | Discontinuous layer or island-like scattered layer | 48 | 0.33 | 5 | 5 |

From the results of Table 6, it was revealed that Examples 23 to 27 in which a silicone resin of a different brand from that of the silicon resin of Examples 1, 5, 10, 15, and 20 was used achieved similar effects to these Examples.

### (Example 28)

### <Manufacture of Adhesive Label for Inkjet Recording>

The adhesive label for inkjet recording of Example 28 was manufactured in the same manner as Example 1, except that the following releasing layer coating liquid 28 was used instead of the releasing layer coating liquid 1 of Example 1.

### -Preparation of Releasing Layer Coating Liquid 28-

The following compositions were mixed to prepare a releasing layer coating liquid 28 having a solid content concentration of 20% by mass.
- Silicone resin emulsion (product name: SILICOLEASE 902 manufactured by Arakawa Chemical Industries, Ltd., solid content concentration of 40% by mass) ---47.6 parts by mass
- Silicone resin curing catalyst (product name: SILICOLEASE 909 manufactured by Arakawa Chemical Industries, Ltd., solid content concentration of 40% by mass) ---2.4 parts by mass
- Water ---50.0 parts by mass

### (Example 29)

### <Manufacture of Adhesive Label for Inkjet Recording>

The adhesive label for inkjet recording of Example 29 was manufactured in the same manner as Example 1, except that the following releasing layer coating liquid 29 was used instead of the releasing layer coating liquid 1 of Example 1.

### -Preparation of Releasing Layer Coating Liquid 29-

The following compositions were mixed to prepare a releasing layer coating liquid 29 having a solid content concentration of 20% by mass.
- Silicone resin emulsion (product name: SILICOLEASE 902 manufactured by Arakawa Chemical Industries, Ltd., solid content concentration of 40% by mass) ---45.0 parts by mass
- Silicone resin curing catalyst (product name: SILICOLEASE 909 manufactured by Arakawa Chemical Industries, Ltd., solid content concentration of 40% by mass) ---2.2 parts by mass
- Polyvinyl acetate emulsion (product name: MOVINYL 168N manufactured by Nippon Synthetic Chemical Industry Co., Ltd., solid content concentration of 50% by mass) --- 2.2 parts by mass
- Water ---50.6 parts by mass

### (Example 30)

### <Manufacture of Adhesive Label for Inkjet Recording>

The adhesive label for inkjet recording of Example 30 was manufactured in the same manner as Example 1, except that the following releasing layer coating liquid 30 was used instead of the releasing layer coating liquid 1 of Example 1.

### -Preparation of Releasing Layer Coating Liquid 30-

The following compositions were mixed to prepare a releasing layer coating liquid 30 having a solid content concentration of 20% by mass.

### [Compositions]

- Silicone resin emulsion (product name: SILICOLEASE 902 manufactured by Arakawa Chemical Industries, Ltd., solid content concentration of 40% by mass) ---45.0 parts by mass
- Silicone resin curing catalyst (product name: SILICOLEASE 909 manufactured by Arakawa Chemical Industries, Ltd., solid content concentration of 40% by mass) ---2.2 parts by mass
- Acrylic-modified organopolysiloxane emulsion (product name: CHALINE R-170EM manufactured by Nissin Chemical Industry Co., Ltd., solid content concentration of 46% by mass) ---2.4 parts by mass
- Water ---50.4 parts by mass

### (Example 31)

### <Manufacture of Adhesive Label for Inkjet Recording>

The adhesive label for inkjet recording of Example 31 was manufactured in the same manner as Example 1, except that the following releasing layer coating liquid 31 was used instead of the releasing layer coating liquid 1 of Example 1.

### -Preparation of Releasing Layer Coating Liquid 31-

The following compositions were mixed to prepare a releasing layer coating liquid 31 having a solid content concentration of 20% by mass.

### [Compositions]

- Silicone resin emulsion (product name: SILICOLEASE 902 manufactured by Arakawa Chemical Industries, Ltd., solid content concentration of 40% by mass) ---40.4 parts by mass
- Silicone resin curing catalyst (product name: SILICOLEASE 909 manufactured by Arakawa Chemical Industries, Ltd., solid content concentration of 40% by mass) ---2.0 parts by mass
- Polyvinyl acetate emulsion (product name: MOVINYL 168N manufactured by Nippon Synthetic Chemical Industry Co., Ltd., solid content concentration of 50% by mass) --- 2.0 parts by mass

- Polyethylene particle dispersion (product name: CHEMIPEARL W410 manufactured by Mitsui Chemicals, Inc., solid content concentration of 40% by mass) ---5.1 parts by mass
- Water ---50.5 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) was 10 µm.

### (Example 32)

### <Manufacture of Adhesive Label for Inkjet Recording>

The adhesive label for inkjet recording of Example 32 was manufactured in the same manner as Example 1, except that the following releasing layer coating liquid 32 was used instead of the releasing layer coating liquid 1 of Example 1.

### -Preparation of Releasing Layer Coating Liquid 32-

The following compositions were mixed to prepare a releasing layer coating liquid 32 having a solid content concentration of 20% by mass.

### [Compositions]

- Silicone resin emulsion (product name: SILICOLEASE 902 manufactured by Arakawa Chemical Industries, Ltd., solid content concentration of 40% by mass) ---38.5 parts by mass
- Silicone resin curing catalyst (product name: SILICOLEASE 909 manufactured by Arakawa Chemical Industries, Ltd., solid content concentration of 40% by mass) ---1.9 parts by mass
- Polyvinyl acetate emulsion (product name: MOVINYL 168N manufactured by Nippon Synthetic Chemical Industry Co., Ltd., solid content concentration of 50% by mass) --- 1.9 parts by mass
- Acrylic-modified organopolysiloxane emulsion (product name: CHALINE R-170EM manufactured by Nissin Chemical Industry Co., Ltd., solid content concentration of 46% by mass) ---2.1 parts by mass
- Polyethylene particle dispersion (product name: CHEMIPEARL W410 manufactured by Mitsui Chemicals, Inc., solid content concentration of 40% by mass) ---4.8 parts by mass
- Water ---50.8 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) was 10 µm.

Next, characteristics of the adhesive labels for inkjet recording of Examples 28 to 32 were evaluated in the same manner as Example 1. The results are shown in Table 7.

**Table 7**

| | Film formed state | Coverage (%) | Separation power (N/cm) | Inkjet printing suitability | Physical durability of image |
|---|---|---|---|---|---|
| Ex. 28 | Discontinuous layer or island-like scattered layer | 22 | 1.81 | 4 | 4 |
| Ex. 29 | Discontinuous layer or island-like scattered layer | 36 | 1.18 | 4 | 4 |
| Ex. 30 | Discontinuous layer or island-like scattered layer | 31 | 1.39 | 4 | 4 |
| Ex. 31 | Discontinuous layer or island-like scattered layer | 37 | 1.06 | 4 | 5 |
| Ex. 32 | Discontinuous layer or island-like scattered layer | 51 | 0.34 | 4 | 5 |

From the results of Table 7, it was revealed that Examples 28 to 32 in which a silicone resin of a yet different brand from that of the silicon resin of Examples 1, 5, 10, 15, and 20 was used achieved similar effects to these Examples, and that the effects of the present invention could be achieved irrespective of the kinds of the silicone resins.

### (Example 33)

### <Manufacture of Adhesive Label for Inkjet Recording>

The adhesive label for inkjet recording of Example 33 was manufactured in the same manner as Example 1, except that an ink receiving layer 2 manufactured in the manner described below was used instead of the ink receiving layer 1 of Example 1.

### -Preparation of Inorganic Particle Dispersion Liquid B-

Polydiallyldimethyl ammonium chloride (product name: SHALLOL DC-902P manufactured by Dai-Ichi Kogyo Seiyaku Co., Ltd., 51% by mass aqueous solution) (0.78 parts by mass) was dissolved in water (39.22 parts by mass), and gas-phase silica (product name: AEROSIL 200 manufactured by Nippon Aerosil Co., Ltd.) (10 parts by mass) was dispersed in the resulting solution. This dispersion liquid was processed with a high-pressure homogenizer to thereby prepare an inorganic particle dispersion liquid B with a solid content concentration of 20.8% by mass and a number average particle diameter of 0.10 µm.

### -Preparation of Ink Receiving Layer Coating Liquid 2-

Water (31.4 parts by mass) was added to the prepared inorganic particle dispersion liquid B (47.6 parts by mass), and a 10% by mass concentration aqueous solution of acetoacetyl-modified polyvinyl alcohol (product name: GOHSEFIMER Z-410 manufactured by Nippon Synthetic Chemical Industry Co., Ltd.) (21.0 parts by mass) was mixed therewith, to thereby prepare an ink receiving layer coating liquid 2 having a solid content concentration of 12% by mass.

### -Formation of Ink Receiving Layer 2-

High-quality paper having a basis weight of 63 g/m² was used as the support member. One surface of the high-quality paper was coated with the ink receiving layer coating liquid 2 with a wire bar such that the amount of solid content coated would be 15 g/m². The coated surface was first irradiated with ultraviolet with a high-pressure mercury lamp in an integrated irradiation amount of 500 mJ/cm² measured with an integrating ultraviolet illuminometer (PD-365 manufactured by Eye Graphics Co., Ltd.), and then dried with hot air of 120°C, to thereby form an ink receiving layer 2.

### (Example 34)

### <Manufacture of Adhesive Label for Inkjet Recording>

The adhesive label for inkjet recording of Example 34 was manufactured in the same manner as Example 2, except that the ink receiving layer 2 manufactured in Example 33 was used instead of the ink receiving layer 1 of Example 2.

### (Example 35)

### <Manufacture of Adhesive Label for Inkjet Recording>

The adhesive label for inkjet recording of Example 35 was manufactured in the same manner as Example 7, except that the ink receiving layer 2 manufactured in Example 33 was used instead of the ink receiving layer 1 of Example 7.

### (Example 36)

### <Manufacture of Adhesive Label for Inkjet Recording>

The adhesive label for inkjet recording of Example 36 was manufactured in the same manner as Example 11, except that the ink receiving layer 2 manufactured in Example 33 was used instead of the ink receiving layer 1 of Example 11.

### (Example 37)

### <Manufacture of Adhesive Label for Inkjet Recording>

The adhesive label for inkjet recording of Example 37 was manufactured in the same manner as Example 15, except that the ink receiving layer 2 manufactured in Example 33 was used instead of the ink receiving layer 1 of Example 15.

### (Example 38)

### <Manufacture of Adhesive Label for Inkjet Recording>

The adhesive label for inkjet recording of Example 38 was manufactured in the same manner as Example 18, except that the ink receiving layer 2 manufactured in Example 33 was used instead of the ink receiving layer 1 of Example 18.

### (Example 39)

### <Manufacture of Adhesive Label for Inkjet Recording>

The adhesive label for inkjet recording of Example 39 was manufactured in the same manner as Example 19, except that the ink receiving layer 2 manufactured in Example 33 was used instead of the ink receiving layer 1 of Example 19.

### (Example 40)

### <Manufacture of Adhesive Label for Inkjet Recording>

The adhesive label for inkjet recording of Example 40 was manufactured in the same manner as Example 20, except that the ink receiving layer 2 manufactured in Example 33 was used instead of the ink receiving layer 1 of Example 20.

Next, characteristics of the adhesive labels for inkjet recording of Examples 33 to 40 were evaluated in the same manner as Example 1. The results are shown in Table 8.

**Table 8**

| | Film formed state | Coverage (%) | Separation power (N/cm) | Inkjet printing suitability | Physical durability of image |
|---|---|---|---|---|---|
| Ex. 33 | Discontinuous layer or island-like scattered layer | 26 | 1.67 | 4 | 4 |
| Ex. 34 | Discontinuous layer or island-like scattered layer | 48 | 0.69 | 4 | 4 |
| Ex. 35 | Discontinuous layer or island-like scattered layer | 41 | 0.80 | 4 | 4 |
| Ex. 36 | Discontinuous layer or island-like scattered layer | 57 | 0.69 | 3 | 4 |
| Ex. 37 | Discontinuous layer or island-like scattered layer | 36 | 1.00 | 5 | 5 |
| Ex. 38 | Discontinuous layer or island-like scattered layer | 31 | 1.23 | 4 | 5 |
| Ex. 39 | Discontinuous layer or island-like scattered layer | 33 | 1.17 | 5 | 5 |
| Ex. 40 | Discontinuous layer or island-like scattered layer | 49 | 0.36 | 5 | 5 |

From the results of Table 8, it was revealed that Examples 33 to 40 in which the inorganic particles (gas-phase silica) contained in the ink receiving layer had a number average particle diameter of 0.10 µm could achieve similar effects to Examples 1, 2, 7, 11, 15, 18, 19, and 20 in which the inorganic particles contained in the ink receiving layer had a number average particle diameter of 0.25 µm.

### (Example 41)

### <Manufacture of Adhesive Label for Inkjet Recording>

The adhesive label for inkjet recording of Example 41 was manufactured in the same manner as Example 1, except that an ink receiving layer 3 manufactured in the manner described below was used instead of the ink receiving layer 1 of Example 1.

### -Preparation of Inorganic Particle Dispersion Liquid C-

Polydiallyldimethyl ammonium chloride (product name: SHALLOL DC-902P manufactured by Dai-Ichi Kogyo Seiyaku Co., Ltd., 51% by mass aqueous solution) (0.78 parts by mass) was dissolved in water (39.22 parts by mass), and wet silica (product name: NIPSIL LP manufactured by Tosoh Silica Corporation) (10 parts by mass) was dispersed in the resulting solution. This dispersion liquid was processed with a beads mill to thereby prepare an inorganic particle dispersion liquid C with a solid content concentration of 20.8% by mass and an average particle diameter of 0.50 µm.

### -Preparation of Ink Receiving Layer Coating Liquid 3-

Water (31.4 parts by mass) was added to the prepared inorganic particle dispersion liquid C (47.6 parts by mass), and a 10% by mass concentration aqueous solution of acetoacetyl-modified polyvinyl alcohol (product name: GOHSEFIMER Z-410 manufactured by Nippon Synthetic Chemical Industry Co., Ltd.) (21.0 parts by mass) was mixed therewith, to thereby prepare an ink receiving layer coating liquid 3 having a solid content concentration of 12% by mass.

### -Formation of Ink Receiving Layer 3-

High-quality paper having a basis weight of 63 g/m² was used as the support member. One surface of the high-quality paper was coated with the ink receiving layer coating liquid 3 with a wire bar such that the amount of solid content coated would be 15 g/m². The coated surface was first irradiated with ultraviolet with a high-pressure mercury lamp in an integrated irradiation amount of 500 mJ/cm² measured with an integrating ultraviolet illuminometer (PD-365 manufactured by Eye Graphics Co., Ltd.), and then dried with hot air of 120°C, to thereby form an ink receiving layer 3.

### (Example 42)

### <Manufacture of Adhesive Label for Inkjet Recording>

The adhesive label for inkjet recording of Example 42 was manufactured in the same manner as Example 2, except that the ink receiving layer 3 manufactured in Example 41 was used instead of the ink receiving layer 1 of Example 2.

### (Example 43)

### <Manufacture of Adhesive Label for Inkjet Recording>

The adhesive label for inkjet recording of Example 43 was manufactured in the same manner as Example 7, except that the ink receiving layer 3 manufactured in Example 41 was used instead of the ink receiving layer 1 of Example 7.

### (Example 44)

### <Manufacture of Adhesive Label for Inkjet Recording>

The adhesive label for inkjet recording of Example 44 was manufactured in the same manner as Example 11, except that the ink receiving layer 3 manufactured in Example 41 was used instead of the ink receiving layer 1 of Example 11.

### (Example 45)

### <Manufacture of Adhesive Label for Inkjet Recording>

The adhesive label for inkjet recording of Example 45 was manufactured in the same manner as Example 15, except that the ink receiving layer 3 manufactured in Example 41 was used instead of the ink receiving layer 1 of Example 15.

### (Example 46)

### <Manufacture of Adhesive Label for Inkjet Recording>

The adhesive label for inkjet recording of Example 46 was manufactured in the same manner as Example 18, except that the ink receiving layer 3 manufactured in Example 41 was used instead of the ink receiving layer 1 of Example 18.

### (Example 47)

### <Manufacture of Adhesive Label for Inkjet Recording>

The adhesive label for inkjet recording of Example 47 was manufactured in the same manner as Example 19, except that the ink receiving layer 3 manufactured in Example 41 was used instead of the ink receiving layer 1 of Example 19.

### (Example 48)

### <Manufacture of Adhesive Label for Inkjet Recording>

The adhesive label for inkjet recording of Example 48 was manufactured in the same manner as Example 20, except that the ink receiving layer 3 manufactured in Example 41 was used instead of the ink receiving layer 1 of Example 20.

Next, characteristics of the adhesive labels for inkjet recording of Examples 41 to 48 were evaluated in the same manner as Example 1. The results are shown in Table 9.

**Table 9**

| | Film formed state | Coverage (%) | Separation power (N/cm) | Inkjet printing suitability | Physical durability of image |
|---|---|---|---|---|---|
| Ex. 41 | Discontinuous layer or island-like scattered layer | 24 | 1.76 | 4 | 4 |
| Ex. 42 | Discontinuous layer or island-like scattered layer | 44 | 0.75 | 4 | 4 |
| Ex. 43 | Discontinuous layer or island-like scattered layer | 42 | 0.82 | 4 | 4 |
| Ex. 44 | Discontinuous layer or island-like scattered layer | 55 | 0.62 | 3 | 4 |
| Ex. 45 | Discontinuous layer or island-like scattered layer | 37 | 1.07 | 5 | 5 |
| Ex. 46 | Discontinuous layer or island-like scattered layer | 32 | 1.21 | 5 | 5 |
| Ex. 47 | Discontinuous layer or island-like scattered layer | 35 | 1.14 | 5 | 5 |
| Ex. 48 | Discontinuous layer or island-like scattered layer | 48 | 0.31 | 5 | 5 |

From the results of Table 9, it was revealed that Examples 41 to 48 in which the inorganic particles (wet silica) contained in the ink receiving layer had a number average particle diameter of 0.50 µm could achieve similar effects to Examples 1, 2, 7, 11, 15, 18, 19, and 20 in which the inorganic particles contained in the ink receiving layer had a number average particle diameter of 0.25 µm.

### (Example 49)

### <Manufacture of Adhesive Label for Inkjet Recording>

The adhesive label for inkjet recording of Example 49 was manufactured in the same manner as Example 1, except that the ink receiving layer 4 manufactured in the manner described below was used instead of the ink receiving layer 1 of Example 1.

### -Preparation of Inorganic Particle Dispersion Liquid A-

Polydiallyldimethyl ammonium chloride (product name: SHALLOL DC-902P manufactured by Dai-Ichi Kogyo Seiyaku Co., Ltd., 51% by mass aqueous solution) (0.78 parts by mass) was dissolved in water (39.22 parts by mass), and gas-phase silica (product name: AEROSIL 300 manufactured by Nippon Aerosil Co., Ltd.) (10 parts by mass) was dispersed in the resulting solution. This dispersion liquid was processed with a high-pressure homogenizer to thereby prepare an inorganic particle dispersion liquid A with a solid content concentration of 20.8% by mass and a number average particle diameter of 0.25 µm.

### -Preparation of Ink Receiving Layer Coating Liquid 4-

Water (27.6 parts by mass) was added to the prepared inorganic particle dispersion liquid A (46.5 parts by mass), and boric acid (0.28 party by mass) was dissolved in the resulting liquid. An 8% by mass concentration aqueous solution of polyvinyl alcohol (product name: PVA-235 manufactured by Kuraray Co., Ltd.) (25.6 parts by mass) was mixed with this liquid, to thereby prepare an ink receiving layer coating liquid 4 having a solid content concentration of 12% by mass.

### -Formation of Ink Receiving Layer 4-

High-quality paper having a basis weight of 63 g/m² was used as the support member. One surface of the high-quality paper was coated with the ink receiving layer coating liquid 4 that was heated to 40°C with a wire bar such that the amount of solid content coated would be 15 g/m². The coated layer was cooled with air of 5°C, and after this, dried with air having a temperature of 20°C and relative humidity of 20%RH, to thereby form an ink receiving layer 4.

### (Example 50)

### <Manufacture of Adhesive Label for Inkjet Recording>

The adhesive label for inkjet recording of Example 50 was manufactured in the same manner as Example 2, except that the ink receiving layer 4 manufactured in Example 49 was used instead of the ink receiving layer 1 of Example 2.

### (Example 51)

### <Manufacture of Adhesive Label for Inkjet Recording>

The adhesive label for inkjet recording of Example 51 was manufactured in the same manner as Example 7, except that the ink receiving layer 4 manufactured in Example 49 was used instead of the ink receiving layer 1 of Example 7.

### (Example 52)

### <Manufacture of Adhesive Label for Inkjet Recording>

The adhesive label for inkjet recording of Example 52 was manufactured in the same manner as Example 11, except that the ink receiving layer 4 manufactured in Example 49 was used instead of the ink receiving layer 1 of Example 11.

### (Example 53)

### <Manufacture of Adhesive Label for Inkjet Recording>

The adhesive label for inkjet recording of Example 53 was manufactured in the same manner as Example 15, except that the ink receiving layer 4 manufactured in Example 49 was used instead of the ink receiving layer 1 of Example 15.

### (Example 54)

### <Manufacture of Adhesive Label for Inkjet Recording>

The adhesive label for inkjet recording of Example 54 was manufactured in the same manner as Example 18, except that the ink receiving layer 4 manufactured in Example 49 was used instead of the ink receiving layer 1 of Example 18.

### (Example 55)

### <Manufacture of Adhesive Label for Inkjet Recording>

The adhesive label for inkjet recording of Example 55 was manufactured in the same manner as Example 19, except that the ink receiving layer 4 manufactured in Example 49 was used instead of the ink receiving layer 1 of Example 19.

### (Example 56)

### <Manufacture of Adhesive Label for Inkjet Recording>

The adhesive label for inkjet recording of Example 56 was manufactured in the same manner as Example 20, except that the ink receiving layer 4 manufactured in Example 49 was used instead of the ink receiving layer 1 of Example 20.

Next, characteristics of the adhesive labels for inkjet recording of Examples 49 to 56 were evaluated in the same manner as Example 1. The results are shown in Table 10.

**Table 10**

| | Film formed state | Coverage (%) | Separation power (N/cm) | Inkjet printing suitability | Physical durability of image |
|---|---|---|---|---|---|
| Ex. 49 | Discontinuous layer or island-like scattered layer | 22 | 1.80 | 4 | 5 |
| Ex. 50 | Discontinuous layer or island-like scattered layer | 42 | 0.77 | 4 | 5 |
| Ex. 51 | Discontinuous layer or island-like scattered layer | 40 | 0.83 | 4 | 4 |
| Ex. 52 | Discontinuous layer or island-like scattered layer | 51 | 0.63 | 3 | 5 |
| Ex. 53 | Discontinuous layer or island-like scattered layer | 35 | 1.07 | 5 | 5 |
| Ex. 54 | Discontinuous layer or island-like scattered layer | 30 | 1.24 | 4 | 5 |
| Ex. 55 | Discontinuous layer or island-like scattered layer | 31 | 1.19 | 4 | 5 |
| Ex. 56 | Discontinuous layer or island-like scattered layer | 49 | 0.33 | 5 | 5 |

From the results of Table 10, it was revealed that Examples 49 to 56 which used a binder contained in the ink receiving layer and a method for manufacturing the ink receiving layer that were different from those of Examples 1, 2, 7, 11, 15, 18, 19, and 20 could achieve similar effects to these Examples. It was revealed from this that irrespective of the kind of the ink receiving layer, use of an ink receiving layer containing inorganic particles having a number average particle diameter of from 0.1 µm to 0.5 µm could realize the effects of the present invention.

### (Example 57)

### <Manufacture of Adhesive Label for Inkjet Recording>

### -Preparation of Ink Receiving Layer Coating Liquid 5-

Water (28.5 parts by mass) was added to a 5% by mass polyvinyl pyrrolidone aqueous solution (product name: K-90 manufactured by Nippon Shokubai Co., Ltd.) (56.8 parts by mass). Boric acid (0.16 parts by mass) was dissolved in the resulting liquid, and an 8% by mass aqueous solution of polyvinyl alcohol (product name: PVA-235 manufactured by Kuraray Co., Ltd.) (14.5 parts by mass) was further mixed in the liquid to thereby prepare an ink receiving layer coating liquid 5 having a solid content concentration of 7% by mass.

### -Formation of Ink Receiving Layer 5-

High-quality paper having a basis weight of 63 g/m² was used as the support member. One surface of the high-quality paper was coated with the ink receiving layer coating liquid 5 with a wire bar such that the amount of solid content coated would be 15 g/m². Then, the coated surface was dried with hot air of 120°C, to thereby form an ink receiving layer 5.

### -Preparation of Releasing Layer Coating Liquid 1-

A releasing layer coating liquid 1 having a solid content concentration of 20% by mass was prepared in the same manner as Example 1.

### [Compositions]

- Silicone resin emulsion (product name: KM-3951 manufactured by Shin-Etsu Chemical Co., Ltd., solid content concentration of 40% by mass) ---47.6 parts by mass
- Silicone resin curing catalyst (product name: CAT-PM-10A manufactured by Shin-Etsu Chemical Co., Ltd., solid content concentration of 40% by mass) ---2.4 parts by mass
- Water ---50.0 parts by mass

### -Formation of Releasing Layer 1-

The surface of the formed ink receiving layer 5 was coated with the releasing layer coating liquid 1 with a wire bar such that the amount of solid content coated would be 3.0 g/m². Then, the coated surface was dried in an oven of 100°C for 10 minutes, to thereby form a releasing layer.

### -Formation of Adhesive Layer 1-

The surface of the support member on which the ink receiving layer was not provided was coated with a pressure-sensitive adhesive (acrylic emulsion, product name: BPW6111 manufactured by Toyo Ink Co., Ltd., solid content concentration of 60% by mass) such that the amount of solid content coated would be 15 g/m², and dried with hot air of 110°C, to thereby form an adhesive layer 1. In the manner described above, the adhesive label for inkjet recording of Example 57 was manufactured.

Next, characteristics of the adhesive label for inkjet printing of Example 57 were evaluated in the same manner as Example 1. The results are shown in Table 11.

**Table 11**

| | Film formed state | Coverage (%) | Separation power (N/cm) | Inkjet printing suitability | Physical durability of image |
|---|---|---|---|---|---|
| Ex. 57 | Continuous film formed layer partially including discontinuous portions | 42 | 1.02 | 3 | 3 |

From the results of Table 11, in Example 57 different from Example 1 in that the ink receiving layer was free of inorganic particles, the inkjet printing suitability and the physical durability of the image were slightly poorer than Example 1.

### (Comparative Example 1)

### <Manufacture of Adhesive Label for Inkjet Recording>

The adhesive label for inkjet recording of Comparative Example 1 was manufactured in the same manner as Example 1, except that a releasing layer coating liquid 33 described below was used instead of the releasing layer coating liquid 1 of Example 1.

### -Preparation of Releasing Layer Coating Liquid 33-

Long-chain alkyl group-containing polyvinyl alcohol (product name: RESEM K-256 manufactured by Chukyo Yushi Co., Ltd., solid content concentration of 20% by mass) was used as the releasing layer coating liquid 33.

### (Comparative Example 2)

### <Manufacture of Adhesive Label for Inkjet Recording>

The adhesive label for inkjet recording of Comparative Example 2 was manufactured in the same manner as Example 1, except that a releasing layer coating liquid 34 described below was used instead of the releasing layer coating liquid 1 of Example 1.

### -Preparation of Releasing Layer Coating Liquid 34-

Long-chain alkyl group-containing polyvinyl alcohol (product name: RESEM N-137 manufactured by Chukyo Yushi Co., Ltd., solid content concentration of 20% by mass) was used as the releasing layer coating liquid 34.

### (Comparative Example 3)

### <Manufacture of Adhesive Label for Inkjet Recording>

The adhesive label for inkjet recording of Comparative Example 3 was manufactured in the same manner as Example 1, except that a releasing layer coating liquid 35 described below was used instead of the releasing layer coating liquid 1 of Example 1.

### -Preparation of Releasing Layer Coating Liquid 35-

The following compositions were mixed to prepare the releasing layer coating liquid 35 having a solid content concentration of 20% by mass.

### [Compositions]

- Long-chain alkyl-group containing polyvinyl alcohol (product name: RESEM K-256 manufactured by Chukyo Yushi Co., Ltd., solid content concentration of 20% by mass) ---94.1 parts by mass
- Polyvinyl acetate emulsion (product name: MOVINYL 168N manufactured by Nippon Synthetic Chemical Industry Co., Ltd., solid content concentration of 50% by mass) --- 2.4 parts by mass
- Water ---3.5 parts by mass

### (Comparative Example 4)

### <Manufacture of Adhesive Label for Inkjet Recording>

The adhesive label for inkjet recording of Comparative Example 4 was manufactured in the same manner as Example 1, except that a releasing layer coating liquid 36 described below was used instead of the releasing layer coating liquid 1 of Example 1.

### -Preparation of Releasing Layer Coating Liquid 36-

The following compositions were mixed to prepare the releasing layer coating liquid 36 having a solid content concentration of 20% by mass.

### [Compositions]

- Long-chain alkyl-group containing polyvinyl alcohol (product name: RESEM N-137 manufactured by Chukyo Yushi Co., Ltd., solid content concentration of 20% by mass) ---94.1 parts by mass
- Polyvinyl acetate emulsion (product name: MOVINYL 168N manufactured by Nippon Synthetic Chemical Industry Co., Ltd., solid content concentration of 50% by mass) --- 2.4 parts by mass
- Water ---3.5 parts by mass

### (Comparative Example 5)

### <Manufacture of Adhesive Label for Inkjet Recording>

The adhesive label for inkjet recording of Comparative Example 5 was manufactured in the same manner as Example 1, except that a releasing layer coating liquid 37 described below was used instead of the releasing layer coating liquid 1 of Example 1.

### -Preparation of Releasing Layer Coating Liquid 37-

The following compositions were mixed to prepare the releasing layer coating liquid 37 having a solid content concentration of 20% by mass.

### [Compositions]

- Long-chain alkyl-group containing polyvinyl alcohol (product name: RESEM K-256 manufactured by Chukyo Yushi Co., Ltd., solid content concentration of 20% by mass) ---88.9 parts by mass
- Acrylic-modified organopolysiloxane emulsion (product name: CHALINE NE-500 manufactured by Nissin Chemical Industry Co., Ltd.,, solid content concentration of 60% by mass) --- 3.7 parts by mass
- Water ---7.4 parts by mass

### (Comparative Example 6)

### <Manufacture of Adhesive Label for Inkjet Recording>

The adhesive label for inkjet recording of Comparative Example 6 was manufactured in the same manner as Example 1, except that a releasing layer coating liquid 38 described below was used instead of the releasing layer coating liquid 1 of Example 1.

### -Preparation of Releasing Layer Coating Liquid 38-

The following compositions were mixed to prepare the releasing layer coating liquid 38 having a solid content concentration of 20% by mass.

### [Compositions]

- Long-chain alkyl-group containing polyvinyl alcohol (product name: RESEM N-137 manufactured by Chukyo Yushi Co., Ltd., solid content concentration of 20% by mass) ---88.9 parts by mass
- Acrylic-modified organopolysiloxane emulsion (product name: CHALINE NE-500 manufactured by Nissin Chemical Industry Co., Ltd., solid content concentration of 60% by mass) --- 3.7 parts by mass
- Water ---7.4 parts by mass

### (Comparative Example 7)

### <Manufacture of Adhesive Label for Inkjet Recording>

The adhesive label for inkjet recording of Comparative Example 7 was manufactured in the same manner as Example 1, except that a releasing layer coating liquid 39 described below was used instead of the releasing layer coating liquid 1 of Example 1.

### -Preparation of Releasing Layer Coating Liquid 39-

The following compositions were mixed to prepare the releasing layer coating liquid 39 having a solid content concentration of 20% by mass.

### [Compositions]

- Long-chain alkyl-group containing polyvinyl alcohol (product name: RESEM K-256 manufactured by Chukyo Yushi Co., Ltd., solid content concentration of 20% by mass) ---84.2 parts by mass
- Polyvinyl acetate emulsion (product name: MOVINYL 168N manufactured by Nippon Synthetic Chemical Industry Co., Ltd., solid content concentration of 50% by mass) --- 2.1 parts by mass
- Polyolefin particle dispersion (product name: CHMIPEARL W410 manufactured by Mitsui Chemicals, Inc., solid content concentration of 40% by mass) ---5.3 parts by mass
- Water ---8.4 parts by mass

### (Comparative Example 8)

### <Manufacture of Adhesive Label for Inkjet Recording>

The adhesive label for inkjet recording of Comparative Example 8 was manufactured in the same manner as Example 1, except that a releasing layer coating liquid 40 described below was used instead of the releasing layer coating liquid 1 of Example 1.

### -Preparation of Releasing Layer Coating Liquid 40-

The following compositions were mixed to prepare the releasing layer coating liquid 40 having a solid content concentration of 20% by mass.

### [Compositions]

- Long-chain alkyl-group containing polyvinyl alcohol (product name: RESEM N-137 manufactured by Chukyo Yushi Co., Ltd., solid content concentration of 20% by mass) ---84.2 parts by mass
- Polyvinyl acetate emulsion (product name: MOVINYL 168N manufactured by Nippon Synthetic Chemical Industry Co., Ltd., solid content concentration of 50% by mass) --- 2.1 parts by mass
- Polyethylene particle dispersion (product name: CHMIPEARL W410 manufactured by Mitsui Chemicals, Inc., solid content concentration of 40% by mass) ---5.3 parts by mass
- Water ---8.4 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) was 10 µm.

### (Comparative Example 9)

### <Manufacture of Adhesive Label for Inkjet Recording>

The adhesive label for inkjet recording of Comparative Example 9 was manufactured in the same manner as Example 1, except that a releasing layer coating liquid 41 described below was used instead of the releasing layer coating liquid 1 of Example 1.

### -Preparation of Releasing Layer Coating Liquid 41-

The following compositions were mixed to prepare the releasing layer coating liquid 41 having a solid content concentration of 20% by mass.

### [Compositions]

- Long-chain alkyl-group containing polyvinyl alcohol (product name: RESEM K-256 manufactured by Chukyo Yushi Co., Ltd., solid content concentration of 20% by mass) --- 80.0 parts by mass
- Polyvinyl acetate emulsion (product name: MOVINYL 168N manufactured by Nippon Synthetic Chemical Industry Co., Ltd., solid content concentration of 50% by mass) --- 2.0 parts by mass
- Acrylic-modified organopolysiloxane emulsion (product name: CHALINE R-170EM manufactured by Nissin Chemical Industry Co., Ltd., solid content concentration of 45% by mass) --- 2.2 parts by mass
- Polyethylene particle dispersion (product name: CHMIPEARL W410 manufactured by Mitsui Chemicals, Inc., solid content concentration of 40% by mass) ---5.0 parts by mass
- Water ---10.8 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) was 10 µm.

### (Comparative Example 10)

### <Manufacture of Adhesive Label for Inkjet Recording>

The adhesive label for inkjet recording of Comparative Example 10 was manufactured in the same manner as Example 1, except that a releasing layer coating liquid 42 described below was used instead of the releasing layer coating liquid 1 of Example 1.

### -Preparation of Releasing Layer Coating Liquid 42-

The following compositions were mixed to prepare the releasing layer coating liquid 42 having a solid content concentration of 20% by mass.

### [Compositions]

- Long-chain alkyl-group containing polyvinyl alcohol (product name: RESEM N-137 manufactured by Chukyo Yushi Co., Ltd., solid content concentration of 20% by mass) ---80.0 parts by mass
- Polyvinyl acetate emulsion (product name: MOVINYL 168N manufactured by Nippon Synthetic Chemical Industry Co., Ltd., solid content concentration of 50% by mass) --- 2.0 parts by mass
- Acrylic-modified organopolysiloxane emulsion (product name: CHALINE R-170EM manufactured by Nissin Chemical Industry Co., Ltd., solid content concentration of 46% by mass) --- 2.2 parts by mass
- Polyethylene particle dispersion (product name: CHMIPEARL W410 manufactured by Mitsui Chemicals, Inc., solid content concentration of 40% by mass) ---5.0 parts by mass
- Water ---10.8 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) was 10 µm.

### (Comparative Example 11)

### <Manufacture of Adhesive Label for Inkjet Recording>

The adhesive label for inkjet recording of Comparative Example 11 was manufactured in the same manner as Example 1, except that a releasing layer coating liquid 43 described below was used instead of the releasing layer coating liquid 1 of Example 1.

### -Preparation of Releasing Layer Coating Liquid 43-

The following compositions were mixed to prepare the releasing layer coating liquid 43 having a solid content concentration of 20% by mass.

### [Compositions]

- Polyvinyl acetate emulsion (product name: MOVINYL 168N manufactured by Nippon Synthetic Chemical Industry Co., Ltd., solid content concentration of 50% by mass) --- 10.0 parts by mass
- Acrylic-modified organopolysiloxane emulsion (product name: CHALINE R-170EM manufactured by Nissin Chemical Industry Co., Ltd., solid content concentration of 46% by mass) --- 10.9 parts by mass
- Polyethylene particle dispersion (product name: CHMIPEARL W410 manufactured by Mitsui Chemicals, Inc., solid content concentration of 40% by mass) ---25.0 parts by mass
- Water ---54.1 parts by mass

The volume average particle diameter of the polyethylene particles (product name: CHEMIPEARL W410 manufactured by Mitsui Chemicals, Inc.) measured with a laser diffraction/scattering particle size distribution meter (product name: LA-720 manufactured by Horiba Ltd.) was 10 µm.

### (Comparative Example 12)

### <Manufacture of Adhesive Label for Inkjet Recording>

The adhesive label for inkjet recording of Comparative Example 12 was manufactured according to Example 1, but by not forming a releasing layer, and by coating a surface of the support member opposite to the surface on which the ink receiving layer 1 was formed with a pressure-sensitive adhesive acrylic emulsion (product name: BPW6111 manufactured by Toyo Ink Co., Ltd., solid content concentration of 60% by mass) such that the amount of solid content coated would be 15 g/m², and then drying the coated surface with hot air of 110°C.

Next, characteristics of the adhesive labels for inkjet recording of Comparative Examples 1 to 12 were evaluated in the same manner as example 1. The results are shown in Table 12.

**Table 12**

| | Film formed state | Coverage (%) | Separation power (N/cm) | Inkjet printing suitability | Physical durability of image |
|---|---|---|---|---|---|
| Comp. Ex. 1 | Continuous film formed layer | 92 | 0.56 | 1 | 1 |
| Comp. Ex. 2 | Continuous film formed layer | 95 | 0.61 | 1 | 1 |
| Comp. Ex. 3 | Discontinuous layer or island-like scattered layer | 75 | 1.35 | 1 | 2 |
| Comp. Ex. 4 | Discontinuous layer or island-like scattered layer | 73 | 1.42 | 1 | 2 |
| Comp. Ex. 5 | Discontinuous layer or island-like scattered layer | 80 | 1.23 | 1 | 2 |
| Comp. Ex. 6 | Discontinuous layer or island-like scattered layer | 72 | 1.28 | 1 | 2 |
| Comp. Ex. 7 | Continuous film formed layer partially including discontinuous portions | 85 | 0.61 | 1 | 3 |
| Comp. Ex. 8 | Continuous film formed layer partially including discontinuous portions | 84 | 0.72 | 1 | 3 |
| Comp. Ex. 9 | Continuous film formed layer partially including discontinuous portions | 87 | 0.95 | 1 | 3 |
| Comp. Ex. 10 | Continuous film formed layer partially including discontinuous portions | 88 | 1.12 | 1 | 3 |
| Comp. Ex. 11 | Continuous film formed layer partially including discontinuous portions | 90 | 2.50 | 2 | 3 |
| Comp. Ex. 12 | No releasing layer | | Separation occurred in paper | 5 | 3 |

From the results of Table 12, it was revealed that in Comparative Examples 1 and 2 in which the releasing layer contained long-chain alkyl group-containing polyvinyl alcohol instead of silicone resin, the releasing layer was formed on the surface of the ink receiving layer in a film formed state (continuous film state), and the separation power was relatively small, but the inkjet printing suitability was extremely poor. Further, the physical durability of the image was also extremely poor, because the adhesiveness between the printed image and the releasing layer was low.

In Comparative Examples 5 and 6 in which polyvinyl acetate was contained further to Comparative Examples 1 and 2, and in Comparative Examples 5 and 6 in which acrylic-modified organopolysiloxane emulsion was contained further to Comparative Examples 1 and 2, no effect of reducing the separation power was expressed. In Comparative Examples 7 and 8 in which polyvinyl acetate and polyethylene particles having a volume average particle diameter of from 3 µm to 15 µm were contained further to Comparative Examples 1 and 2, the physical durability of the image was improved slightly, but an effect of reducing the separation power and an effect of improving the inkjet printing suitability were not expressed. Further, likewise, in Comparative Examples 9 and 10 in which polyvinyl acetate, acrylic-modified organopolysiloxane emulsion, and polyethylene particles having a volume average particle diameter of from 3 µm to 15 µm were contained further to Comparative Examples 1 and 2, the physical durability of the image was improved slightly, but an effect of reducing the separation power and an effect of improving the inkjet printing suitability were not expressed.

In Comparative Example 11 in which long-chain alkyl group-containing polyvinyl alcohol was not contained, and polyvinyl acetate, acrylic-modified organopolysiloxane emulsion, and polyethylene particles having a volume average particle diameter of from 3 µm to 15 µm were only contained, the separation power was large, and the inkjet printing suitability was also poor. It was revealed that these components alone could not express sufficient functions to qualify as a releasing layer.

In Comparative Example 12 in which a releasing layer was not contained, separation could not occur at the interface between the ink receiving layer and the adhesive layer, but occurred in the support member paper, and no functions were expressed at all as an adhesive label for inkjet recording that was free from the necessity for a paper liner.

### (Comparative Example 13)

### <Manufacture of Adhesive Label for Inkjet Recording>

The adhesive label for inkjet recording of Comparative Example 13 was manufactured in the same manner as Comparative Example 1, except that the ink receiving layer 2 manufactured in Example 33 was used instead of the ink receiving layer 1 of Comparative Example 1.

### (Comparative Example 14)

### <Manufacture of Adhesive Label for Inkjet Recording>

The adhesive label for inkjet recording of Comparative Example 14 was manufactured in the same manner as Comparative Example 3, except that the ink receiving layer 2 manufactured in Example 33 was used instead of the ink receiving layer 1 of Comparative Example 3.

### (Comparative Example 15)

### <Manufacture of Adhesive Label for Inkjet Recording>

The adhesive label for inkjet recording of Comparative Example 15 was manufactured in the same manner as Comparative Example 5, except that the ink receiving layer 2 manufactured in Example 33 was used instead of the ink receiving layer 1 of Comparative Example 5.

### (Comparative Example 16)

### <Manufacture of Adhesive Label for Inkjet Recording>

The adhesive label for inkjet recording of Comparative Example 16 was manufactured in the same manner as Comparative Example 7, except that the ink receiving layer 2 manufactured in Example 33 was used instead of the ink receiving layer 1 of Comparative Example 7.

### (Comparative Example 17)

### <Manufacture of Adhesive Label for Inkjet Recording>

The adhesive label for inkjet recording of Comparative Example 17 was manufactured in the same manner as Comparative Example 9, except that the ink receiving layer 2 manufactured in Example 33 was used instead of the ink receiving layer 1 of Comparative Example 9.

Next, characteristics of the adhesive labels for inkjet recording of Comparative Examples 13 to 17 were evaluated in the same manner as Example 1. The results are shown in Table 13.

**Table 13**

| | Film formed state | Coverage (%) | Separation power (N/cm) | Inkjet printing suitability | Physical durability of image |
|---|---|---|---|---|---|
| Comp. Ex. 13 | Continuous film formed layer | 93 | 0.57 | 1 | 1 |
| Comp. Ex. 14 | Discontinuous layer or island-like scattered layer | 75 | 1.36 | 1 | 2 |
| Comp. Ex. 15 | Discontinuous layer or island-like scattered layer | 79 | 1.22 | 1 | 2 |
| Comp. Ex. 16 | Continuous film formed layer partially including discontinuous portions | 83 | 0.64 | 1 | 3 |
| Comp. Ex. 17 | Continuous film formed layer partially including discontinuous portions | 86 | 0.96 | 1 | 3 |

From the results of Table 13, it was revealed that Comparative Examples 13 to 17 in which the inorganic particles contained in the ink receiving layer had a number average particle diameter of 0.10 µm were inferior in the inkjet printing suitability and the physical durability of the image, and were insufficient as adhesive labels for inkjet recording, compared with Comparative Examples 1, 3, 5, 7, and 9 in which the inorganic particles contained in the ink receiving layer had a number average particle diameter of 0.25 µm.

### (Comparative Example 18)

### <Manufacture of Adhesive Label for Inkjet Recording>

The adhesive label for inkjet recording of Comparative Example 18 was manufactured in the same manner as Comparative Example 1, except that the ink receiving layer 3 manufactured in Example 41 was used instead of the ink receiving layer 1 of Comparative Example 1.

### (Comparative Example 19)

### <Manufacture of Adhesive Label for Inkjet Recording>

The adhesive label for inkjet recording of Comparative Example 19 was manufactured in the same manner as Comparative Example 3, except that the ink receiving layer 3 manufactured in Example 41 was used instead of the ink receiving layer 1 of Comparative Example 3.

### (Comparative Example 20)

### <Manufacture of Adhesive Label for Inkjet Recording>

The adhesive label for inkjet recording of Comparative Example 20 was manufactured in the same manner as Comparative Example 5, except that the ink receiving layer 3 manufactured in Example 41 was used instead of the ink receiving layer 1 of Comparative Example 5.

### (Comparative Example 21)

### <Manufacture of Adhesive Label for Inkjet Recording>

The adhesive label for inkjet recording of Comparative Example 21 was manufactured in the same manner as Comparative Example 7, except that the ink receiving layer 3 manufactured in Example 41 was used instead of the ink receiving layer 1 of Comparative Example 7.

### (Comparative Example 22)

### <Manufacture of Adhesive Label for Inkjet Recording>

The adhesive label for inkjet recording of Comparative Example 22 was manufactured in the same manner as Comparative Example 9, except that the ink receiving layer 3 manufactured in Example 41 was used instead of the ink receiving layer 1 of Comparative Example 9.

Next, characteristics of the adhesive labels for inkjet recording of Comparative Examples 18 to 22 were evaluated in the same manner as Example 1. The results are shown in Table 14.

**Table 14**

| | Film formed state | Coverage (%) | Separation power (N/cm) | Inkjet printing suitability | Physical durability of image |
|---|---|---|---|---|---|
| Comp. Ex. 18 | Continuous film formed layer | 94 | 0.55 | 1 | 1 |
| Comp. Ex. 19 | Discontinuous layer or island-like scattered layer | 76 | 1.31 | 1 | 2 |
| Comp. Ex. 20 | Discontinuous layer or island-like scattered layer | 77 | 1.21 | 1 | 2 |
| Comp. Ex. 21 | Continuous film formed layer partially including discontinuous portions | 84 | 0.58 | 1 | 3 |
| Comp. Ex. 22 | Continuous film formed layer partially including discontinuous portions | 87 | 0.90 | 1 | 3 |

From the results of Table 14, it was revealed that also Comparative Examples 18 to 22 in which the inorganic particles contained in the ink receiving layer had a number average particle diameter of 0.50 µm were inferior in the inkjet printing suitability and the physical durability of the image, and were insufficient as adhesive labels for inkjet recording, compared with Comparative Examples 1, 3, 5, 7, and 9 in which the inorganic particles contained in the ink receiving layer had a number average particle diameter of 0.25 µm.

### (Comparative Example 23)

### <Manufacture of Adhesive Label for Inkjet Recording>

The adhesive label for inkjet recording of Comparative Example 23 was manufactured in the same manner as Comparative Example 1, except that the ink receiving layer 4 manufactured in Example 49 was used instead of the ink receiving layer 1 of Comparative Example 1.

### (Comparative Example 24)

### <Manufacture of Adhesive Label for Inkjet Recording>

The adhesive label for inkjet recording of Comparative Example 24 was manufactured in the same manner as Comparative Example 3, except that the ink receiving layer 4 manufactured in Example 49 was used instead of the ink receiving layer 1 of Comparative Example 3.

### (Comparative Example 25)

### <Manufacture of Adhesive Label for Inkjet Recording>

The adhesive label for inkjet recording of Comparative Example 25 was manufactured in the same manner as Comparative Example 5, except that the ink receiving layer 4 manufactured in Example 49 was used instead of the ink receiving layer 1 of Comparative Example 5.

### (Comparative Example 26)

### <Manufacture of Adhesive Label for Inkjet Recording>

The adhesive label for inkjet recording of Comparative Example 26 was manufactured in the same manner as Comparative Example 7, except that the ink receiving layer 4 manufactured in Example 49 was used instead of the ink receiving layer 1 of Comparative Example 7.

### (Comparative Example 27)

### <Manufacture of Adhesive Label for Inkjet Recording>

The adhesive label for inkjet recording of Comparative Example 27 was manufactured in the same manner as Comparative Example 9, except that the ink receiving layer 4 manufactured in Example 49 was used instead of the ink receiving layer 1 of Comparative Example 9.

### (Comparative Example 28)

### <Manufacture of Adhesive Label for Inkjet Recording>

The adhesive label for inkjet recording of Comparative Example 28 was manufactured in the same manner as Example 1, except that the releasing layer coating liquid 1 was coated with a wire bar such that an amount of solid content coated would be 2.0 g/m² instead of 3.0 g/m² of Example 1.

Next, characteristics of the adhesive labels for inkjet recording of Comparative Examples 23 to 28 were evaluated in the same manner as Example 1. The results are shown in Table 15.

**Table 15**

| | Film formed state | Coverage (%) | Separation power (N/cm) | Inkjet printing suitability | Physical durability of image |
|---|---|---|---|---|---|
| Comp. Ex. 23 | Continuous film formed layer | 92 | 0.57 | 1 | 2 |
| Comp. Ex. 24 | Discontinuous layer or island-like scattered layer | 74 | 1.39 | 1 | 2 |
| Comp. Ex. 25 | Discontinuous layer or island-like scattered layer | 75 | 1.26 | 1 | 2 |
| Comp. Ex. 26 | Continuous film formed layer partially including discontinuous portions | 84 | 0.62 | 1 | 3 |
| Comp. Ex. 27 | Continuous film formed layer partially including discontinuous portions | 86 | 0.95 | 1 | 3 |
| *Comp.* Ex. 28 | Continuous film formed layer partially including discontinuous portions | 15 | 2.53 | 5 | 2 |

From the results of Table 15, it was revealed that Comparative Examples 23 to 27 which used a binder contained in the ink receiving layer and a method for manufacturing the ink receiving layer that were different from those of Examples 1, 3, 5, 7, and 9 were also inferior in the inkjet printing suitability and the physical durability of the image, and were insufficient as adhesive labels for inkjet recording.

Further, it was revealed that Comparative Example 28 in which the amount of the releasing layer coated was smaller compared with Example 1 resulted in releasing layer coverage of less than 20%, and was inferior in the separation power and the physical durability of the image on the ink receiving layer, and insufficient as an adhesive label for inkjet recording.

Aspects of the present invention are as follows, for example.
<1> An adhesive label for inkjet recording, including:
   a support member;
   an ink receiving layer and a releasing layer disposed on one surface of the support member in this order; and
   an adhesive layer disposed on the other surface of the support member,
   wherein the releasing layer includes at least a silicone resin, and
   wherein a releasing layer coverage, which is a percentage at which the releasing layer covers the surface of the ink receiving layer, is from 20% to 70%.
<2> The adhesive label for inkjet recording according to <1>,
   wherein the releasing layer coverage is from 30% to 50%.
<3> The adhesive label for inkjet recording according to <1> or <2>,
   wherein the releasing layer is at least any of a discontinuous layer and an island-like scattered layer.
<4> The adhesive label for inkjet recording according to any one of <1> to <3>,
   wherein the releasing layer includes a water-insoluble resin.
<5> The adhesive label for inkjet recording according to <4>,
   wherein the water-insoluble resin is at least any of polyvinyl acetate and ethylene-vinyl acetate copolymer.
<6> The adhesive label for inkjet recording according to <4> or <5>,
   wherein the water-insoluble resin is at least any of acrylic-modified organopolysiloxane and acrylic-based copolymer.
<7> The adhesive label for inkjet recording according to any one of <1> to <6>,
   wherein the releasing layer includes particles of at least any of polyolefin and silicone; and
   wherein the particles have a volume average particle diameter of from 3 µm to 15 µm.
<8> The adhesive label for inkjet recording according to any one of <1> to <7>,
   wherein the ink receiving layer includes inorganic particles; and
   wherein the inorganic particles have a number average particle diameter of from 0.1 µm to 0.5 µm.
<9> The adhesive label for inkjet recording according to any one of <1> to <8>,
   wherein the adhesive label for inkjet recording is in a roll form.

## Claims

1. An adhesive label for inkjet recording, comprising:
a support member;
an ink receiving layer and a releasing layer disposed on one surface of the support member in this order; and
an adhesive layer disposed on the other surface of the support member,
wherein the releasing layer comprises a silicone resin, and
wherein a releasing layer coverage, which is a percentage at which the releasing layer covers a surface of the ink receiving layer, is from 20% to 70%, **characterized in that** the releasing layer is at least any of a discontinuous layer and an island-like scattered layer.

2. The adhesive label for inkjet recording according to claim 1,
wherein the releasing layer coverage is from 30% to 50%.

3. The adhesive label for inkjet recording according to claim 1 or 2,
wherein the releasing layer comprises a water-insoluble resin.

4. The adhesive label for inkjet recording according to claim 3,
wherein the water-insoluble resin is at least any of polyvinyl acetate and ethylene-vinyl acetate copolymer.

5. The adhesive label for inkjet recording according to claim 3 or 4,
wherein the water-insoluble resin is at least any of acrylic-modified organopolysiloxane and acrylic-based copolymer.

6. The adhesive label for inkjet recording according to any one of claims 1 to 5,
wherein the releasing layer comprises particles of at least any of polyolefin and silicone, and
wherein the particles have a volume average particle diameter of from 3 µm to 15 µm measured with a laser diffraction/scattering particle size distribution meter.

7. The adhesive label for inkjet recording according to any one of claims 1 to 6,
wherein the ink receiving layer comprises inorganic particles, and
wherein the inorganic particles have a number average particle diameter of from 0.1 µm to 0.5 µm wherein the number average particle diameter is a value obtained by observing the inorganic particles with an electron microscope at a magnification at which it is possible to discern the secondary particle diameter, obtaining the projected area diameter of each of 100 inorganic particles present in an arbitrary region having a predetermined area, and number-averaging the obtained projected area diameters.

8. The adhesive label for inkjet recording according to any one of claims 1 to 7,
wherein the adhesive label for inkjet recording is in a roll form.

## Patentansprüche

1. Klebeetikett für Tintenstrahlaufzeichnung, umfassend:
ein Trägerelement;
eine Tintenaufnahmeschicht und eine Trennschicht, die auf einer Oberfläche des Trägerelements in dieser Reihenfolge aufgebracht ist; und
eine Klebstoffschicht, die auf der anderen Oberfläche des Trägerelements aufgebracht ist,
wobei die Trennschicht ein Siliconharz umfasst und
wobei eine Trennschichtbedeckung, die ein Prozentsatz ist, mit dem die Trennschicht eine Oberfläche der Tintenaufnahmeschicht bedeckt, 20 % bis 70 % beträgt, **dadurch gekennzeichnet, dass** die Trennschicht mindestens irgendeine von einer diskontinuierlichen Schicht und einer inselähnlichen Streuschicht ist.

2. Klebeetikett für Tintenstrahlaufzeichnung nach Anspruch 1,
wobei die Trennschichtbedeckung 30 % bis 50 % beträgt.

3. Klebeetikett für Tintenstrahlaufzeichnung nach Anspruch 1 oder 2,
wobei die Trennschicht wasserunlösliches Harz umfasst.

4. Klebeetikett für Tintenstrahlaufzeichnung nach Anspruch 3,
wobei das wasserunlösliche Harz mindestens irgendeines von Polyvinylacetat und Ethylen-Vinylacetat-Copolymer ist.

5. Klebeetikett für Tintenstrahlaufzeichnung nach Anspruch 3 oder 4,
wobei das wasserunlösliche Harz mindestens irgendeines von acrylmodifiziertem Organopolysiloxan und Copolymer auf Acrylbasis ist.

6. Klebeetikett für Tintenstrahlaufzeichnung nach irgendeinem der Ansprüche 1 bis 5,
wobei die Trennschicht Teilchen von mindestens irgendeinem von Polyolefin und Silicon umfasst und
wobei die Teilchen einen volumendurchschnittlichen Teilchendurchmesser von 3 µm bis 15 µm, mit einem Laserbeugungs-/streuungsmessgerät für Teilchengrößenverteilung gemessen, aufweisen.

7. Klebeetikett für Tintenstrahlaufzeichnung nach einem der Ansprüche 1 bis 6, wobei die Tintenaufnahmeschicht anorganische Teilchen umfasst und
wobei die anorganischen Teilchen einen zahlendurchschnittlichen Teilchendurchmesser von 0,1 µm bis 0,5 µm aufweisen, wobei der zahlendurchschnittliche Teilchendurchmesser ein Wert ist, der wie folgt erhalten wird: durch Beobachten der anorganischen Teilchen mit einem Elektronenmikroskop mit einer Vergrößerung, bei der es möglich ist, den sekundären Teilchendurchmesser festzustellen, wobei der Durchmesser des projizierten Bereichs von jeweils 100 anorganischen Teilchen erhalten wird, die in einer willkürlichen Region vorliegen, die einen vorbestimmten Bereich aufweist, und Bestimmen des zahlendurchschnittlichen Werts der Durchmesser des erhaltenen projizierten Bereichs.

8. Klebeetikett für Tintenstrahlaufzeichnung nach einem der Ansprüche 1 bis 7, wobei das Klebeetikett für Tintenstrahlaufzeichnung in einer Rollenform vorliegt.

## Revendications

1. Étiquette adhésive pour l'enregistrement par jet d'encre, comprenant:
un élément formant support;
une couche de réception d'encre et une couche de décollement disposées sur une surface de l'élément formant support dans cet ordre; et
une couche adhésive disposée sur l'autre surface de l'élément formant support,
où la couche de décollement comprend une résine de silicone, et
dans laquelle un recouvrement de la couche de décollement, qui est un pourcentage auquel la couche de décollement recouvre une surface de la couche de réception d'encre, est de 20 % à 70 %, **caractérisée en ce que** la couche de décollement est au moins n'importe laquelle d'une couche discontinue et d'une couche à dispersion en îles.

2. Étiquette adhésive pour l'enregistrement par jet d'encre selon la revendication 1,
dans laquelle le recouvrement de couche de décollement est de 30 % à 50 %.

3. Étiquette adhésive pour l'enregistrement par jet d'encre selon la revendication 1 ou 2,
dans laquelle la couche de décollement comprend une résine insoluble dans l'eau.

4. Étiquette adhésive pour l'enregistrement par jet d'encre selon la revendication 3,
dans laquelle la résine insoluble dans l'eau est au moins n'importe lequel d'un poly(acétate de vinyle) et d'un copolymère d'éthylène-acétate de vinyle.

5. Étiquette adhésive pour l'enregistrement par jet d'encre selon la revendication 3 ou 4,
dans laquelle la résine insoluble dans l'eau est au moins n'importe lequel d'un copolymère d'organopolysiloxane modifié avec un groupe acrylique et d'un copolymère à base d'acide acrylique.

6. Étiquette adhésive pour l'enregistrement par jet d'encre selon l'une quelconque des revendications 1 à 5,
dans laquelle la couche de décollement comprend des particules d'au moins n'importe laquelle d'une polyoléfine et de silicone, et
dans laquelle les particules présentent un diamètre de particule moyen en volume de 3 µm à 15 µm mesuré avec un appareil de mesure de la distribution des tailles de particules par diffraction/diffusion laser.

7. Étiquette adhésive pour l'enregistrement par jet d'encre selon l'une quelconque des revendications 1 à 6,
dans laquelle la couche de réception d'encre comprend des particules inorganiques, et
dans laquelle les particules inorganiques présentent un diamètre de particule moyen en nombre de 0,1 µm à 0,5 µm où le diamètre des particules moyen en nombre est une valeur obtenue par observation des particules inorganiques avec un microscope électronique sous un grossissement auquel il est possible de discerner le diamètre des particules secondaires, d'obtenir le diamètre de la surface projetée de chacune de 100 particules inorganiques présentes dans une région arbitraire ayant une surface prédéterminée, et le calcul de la moyenne en nombre des diamètres obtenus de la surface projetée.

8. Étiquette adhésive pour l'enregistrement par jet d'encre selon l'une quelconque des revendications 1 à 7,
dans laquelle l'étiquette adhésive pour l'enregistrement par jet d'encre se présente sous la forme d'un cylindre.
